(19) Europäisches Patentamt
European Patent Office
Office européen des brevets

(11) EP 3 519 181 B1

(12) **EUROPEAN PATENT SPECIFICATION**

(45) Date of publication and mention of the grant of the patent:
**27.04.2022 Bulletin 2022/17**

(21) Application number: **17758415.8**

(22) Date of filing: **21.08.2017**

(51) International Patent Classification (IPC):
***B32B 7/12*** (2006.01) ***B32B 27/08*** (2006.01)
***B32B 27/30*** (2006.01) ***B32B 27/34*** (2006.01)
***C08L 23/04*** (2006.01) ***C08L 51/00*** (2006.01)
***C08L 23/08*** (2006.01) ***C08L 51/06*** (2006.01)

(52) Cooperative Patent Classification (CPC):
(C-Sets available)
**B32B 7/12; B32B 27/08; B32B 27/30; B32B 27/306; B32B 27/34; C08L 23/0815;**
B32B 2250/03; B32B 2250/246; B32B 2270/00; B32B 2274/00; B32B 2307/558; B32B 2439/06; B32B 2439/46; B32B 2439/70; C08L 51/06 (Cont.)

(86) International application number:
**PCT/US2017/047781**

(87) International publication number:
**WO 2018/063578 (05.04.2018 Gazette 2018/14)**

(54) **RESINS FOR USE AS TIE LAYERS IN MULTILAYER FILMS AND MULTILAYER FILMS COMPRISING THE SAME**

HARZE ZUR VERWENDUNG ALS HAFTSCHICHTEN BEI MEHRLAGIGEN FOLIEN UND MEHRLAGIGE FOLIEN DAMIT

RÉSINES À UTILISER COMME COUCHES DE LIAISON DANS DES FILMS MULTICOUCHES ET FILMS MULTICOUCHES LES COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2016 US 201662402303 P**

(43) Date of publication of application:
**07.08.2019 Bulletin 2019/32**

(73) Proprietor: **Dow Global Technologies LLC**
**Midland, MI 48674 (US)**

(72) Inventors:
- **ZHENG, Yong**
  **Manvel, TX 77578 (US)**
- **GUERRA, Suzanne M.**
  **Lake Jackson, TX 77566 (US)**
- **HANSEN, Sydney E.**
  **Houston, TX 77077 (US)**
- **WALTHER, Brian W.**
  **Freeport, TX 77541 (US)**

(74) Representative: **Boult Wade Tennant LLP**
**Salisbury Square House**
**8 Salisbury Square**
**London EC4Y 8AP (GB)**

(56) References cited:
**WO-A1-2014/105404**
**WO-A1-2015/200741**
**WO-A1-2015/200742**
**WO-A1-2015/200743**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 519 181 B1

(52) Cooperative Patent Classification (CPC): (Cont.)

C-Sets
**C08L 23/0815**

## Description

### FIELD

The present invention relates generally to resins that can be used as a tie layer in a multilayer film and to multilayer films comprising one or more tie layers formed from such resins.

### INTRODUCTION

Multilayer films comprising different layers have a number of applications. Certain types of polymers provide different functions. For example, a polyamide layer or an ethylene vinyl alcohol layer might be used to provide barrier properties, while a polyethylene layer might be used to provide strength. As another example, polyethylene terephthalate (PET) layers are sometimes included in multilayer films but is also generally incompatible with polyethylene. Due to incompatibility between some types of layers, a tie layer may be included to facilitate adhesion between layers formed from different types of polymers. In selecting a resin for use as a tie layer, film converters often seek two primary attributes: (1) the tie layer resin's ability to bond dissimilar polymers; and (2) sufficient adhesion strength.

WO 2015/200743 describes blown film with improved toughness.

WO 2014/105404 describes multilayer films containing functional ethylene-based polymer compositions.

While a number of tie layer formulations have been developed, there remains a need for alternative approaches to tie layers.

### SUMMARY

In some embodiments, the present invention provides resins for use as tie layers in multilayer structures. In some embodiments, such resins provide a beneficial combination of adhesion and improved toughness. With the improved toughness provided by tie layers incorporating some embodiments of such resins, the resins provide the opportunity to reduce overall thickness of multilayer structures and/or to down gauge layers formed from engineering polymers (e.g., polyamide, PET, etc.), if utilized in the multilayer structure. A reduction in the amount of such engineering polymers, in some embodiments, can, for example, generate cost savings.

In one aspect, the present invention provides a resin for use as a tie layer in a multilayer structure as defined in appended claim 1.

Some embodiments relate to a pellet formed from any of the inventive resins disclosed herein.

In another aspect, a multilayer structure is provided, the multilayer structure comprising at least three layers, each layer having opposing facial surfaces and arranged in the order A/B/C, wherein Layer A comprises polyethylene, Layer B comprises any of the inventive resins disclosed herein, wherein a top facial surface of Layer B is in adhering contact with a bottom facial surface of Layer A, and Layer C comprises polyamide, ethylene vinyl alcohol, or combinations thereof, wherein a top facial surface of Layer C is in adhering contact with a bottom facial surface of Layer B. Some embodiments relate to an article, such as a package, formed from any of the inventive multilayer structures disclosed herein.

These and other embodiments are described in more detail in the Detailed Description.

### BRIEF DESCRIPTION OF THE DRAWINGS

Figure 1 depicts the plot of "$SCB_f$ versus IR5 Area Ratio" for ten SCB Standards.
Figure 2 depicts the several GPC profiles for the determination of IR5 Height Ratio for a sample composition.
Figure 3 depicts the plot of "$SCB_f$ versus Polyethylene Equivalent molecular Log Mwi (GPC)" for a sample composition.
Figure 4 depicts a plot of the "Mole Percent Comonomer versus Polyethylene Equivalent Log $_{Mwi}$ (GPC)" for a sample composition.

### DETAILED DESCRIPTION

It has been discovered that the inventive resins can be used to form tie layers that provide improved toughness and desirable adhesion in multilayer structures. The resin, in some embodiments, comprises a first composition comprising at least one ethylene-based polymer and having a MWCDI value greater than 0.9, and a melt index ratio (I10/I2) that meets the following equation: $I10/I2 \geq 7.0 - 1.2 \times \log(I2)$, and further includes a maleic anhydride grafted polyethylene

comprising a maleic anhydride grafted high density polyethylene, a maleic anhydride grafted linear low density polyethylene, a maleic anhydride grafted polyethylene elastomer. The first composition has an optimized distribution of the comonomer and a low LCB (Long Chain Branching) nature, which, in combination with the maleic anhydride grafted polyethylene is believed to provide improved toughness when used as part of a tie layer resin. The inventive resins can be useful in forming the inventive multilayer structures of the present invention.

In one embodiment, a resin for use as a tie layer in a multilayer structure is defined in appended claim 1. The first composition, in some embodiments, has a MWCDI value less than, or equal to, 10.0. In some embodiments, the first composition has a ZSVR value from 1.2 to 3.0. The first composition, in some embodiments, has a melt index ratio $I_{10}/I_2$ less than, or equal to, 9.2. In some embodiments, the first composition has a vinyl unsaturation level greater than 10 vinyls per 1,000,000 total carbons.

Inventive resins may comprise a combination of two or more embodiments described herein.

The resin comprises 80 to 95 weight percent of the first composition and 5 to 20 weight percent of the maleic anhydride grafted polyethylene.

In some embodiments, the resin further comprises a polyolefin elastomer. In some such embodiments, the resin comprises 1 to 50 weight percent of the polyolefin plastomer.

The resin, in some embodiments, further comprises a maleic anhydride grafted polyolefin plastomer.

The resins for use as a tie layer of the present invention can be provided as pellets in some embodiments. In some embodiments, the resins can be formed by melt-blending the components in-line at an extruder just prior to forming films or other multilayer structures.

Some embodiments of the present invention relate to multilayer structures, such as multilayer films. In some embodiments, a multilayer structure comprising at least three layers, each layer having opposing facial surfaces and arranged in the order A/B/C, wherein Layer A comprises polyethylene, Layer B comprises an inventive resin according to any of the embodiments disclosed herein, wherein a top facial surface of Layer B is in adhering contact with a bottom facial surface of Layer A, and Layer C comprises polyamide, ethylene vinyl alcohol, or combinations thereof, wherein a top facial surface of Layer C is in adhering contact with a bottom facial surface of Layer B. Layer B is a tie layer in such embodiments. In some embodiments, Layer B comprises at least 2.5% of the total thickness of the multilayer structure. Layer B, in some embodiments, exhibits a normalized dart impact value at least twice the normalized dart value of the multilayer structure when measured according to ASTM D1709 (Method A). In some embodiments, Layer B exhibits a normalized puncture strength value higher than the normalized puncture strength value of the multilayer structure when measured according to ASTM D5748.

Multilayer structures of the present invention comprise a combination of two or more embodiments as described herein.

Multilayer films of the present invention comprise a combination of two or more embodiments as described herein.

Some embodiments of the present invention relate to articles such as packages. In some embodiments, such articles are formed from any of the inventive multilayer structures disclosed herein.

<u>Resin for Tie Layer - First Composition Comprising Ethylene-Based Polymer</u>

As discussed above, tie layer resin comprises a first composition, comprising at least one ethylene-based polymer, wherein the first composition comprises a MWCDI value greater than 0.9, and a melt index ratio (110/12) that meets the following equation: 110/12 $\geq$ 7.0 - 1.2 x log (12).

The ethylene-based polymer may comprise a combination of two or more embodiments as described herein.

In one embodiment, the first composition has a MWCDI value less than, or equal to, 10.0, further less than, or equal to, 8.0, further less than, or equal to, 6.0.

In one embodiment, the first composition has a MWCDI value less than, or equal to, 5.0, further less than, or equal to, 4.0, further less than, or equal to, 3.0.

In one embodiment, the first composition has a MWCDI value greater than, or equal to, 1.0, further greater than, or equal to, 1.1, further greater than, or equal to, 1.2.

In one embodiment, the first composition has a MWCDI value greater than, or equal to, 1.3, further greater than, or equal to, 1.4, further greater than, or equal to, 1.5.

In one embodiment, the first composition has a melt index ratio 110/12 greater than, or equal to, 7.0, further greater than, or equal to, 7.1, further greater than, or equal to, 7.2, further greater than, or equal to, 7.3.

In one embodiment, the first composition has a melt index ratio 110/12 less than, or equal to, 9.2, further less than, or equal to, 9.0, further less than, or equal to, 8.8, further less than, or equal to, 8.5.

In one embodiment, the first composition has a ZSVR value from 1.2 to 3.0, further from 1.2 to 2.5, further 1.2 to 2.0.

In one embodiment, the first composition has a vinyl unsaturation level greater than 10 vinyls per 1,000,000

total carbons. For example, greater than 20 vinyls per 1,000,000 total carbons, or greater than 50 vinyls per 1,000,000 total carbons, or greater than 70 vinyls per 1,000,000 total carbons, or greater than 100 vinyls per 1,000,000 total carbons.

In one embodiment, the first composition has a density in the range of 0.910 to 0.940 g/cm$^3$, for example from 0.910 to 0.930, or from 0.910 to 0.925 g/cm$^3$. For example, the density can be from a lower limit of 0.910, 0.912, or 0.914 g/cm$^3$, to an upper limit of 0.925, 0.927, or 0.930 g/cm$^3$ (1 cm$^3$ = 1 cc).

In one embodiment, the first composition has a melt index ($I_2$ or I2; at 190°C / 2.16kg) from 0.1 to 50 g/10 minutes, for example from 0.1 to 30 g/10 minutes, or from 0.1 to 20 g/10 minutes, or from 0.1 to 10 g/10 minutes. For example, the melt index ($I_2$ or 12; at 190°C / 2.16 kg) can be from a lower limit of 0.1, 0.2, or 0.5 g/10 minutes, to an upper limit of 1.0, 2.0, 3.0, 4.0, 5.0, 10, 15, 20, 25, 30, 40, or 50 g/10 minutes.

In one embodiment, the first composition has a molecular weight distribution, expressed as the ratio of the weight average molecular weight to number average molecular weight ($M_w/M_n$; as determined by conv. GPC) in the range of from 2.2 to 5.0. For example, the molecular weight distribution ($M_w/M_n$) can be from a lower limit of 2.2, 2.3, 2.4, 2.5, 3.0, 3.2, or 3.4, to an upper limit of 3.9, 4.0, 4.1, 4.2, 4.5, 5.0.

In one embodiment, the first composition has a number average molecular weight ($M_n$; as determined by conv. GPC) in the range from 10,000 to 50,000 g/mole. For example, the number average molecular weight can be from a lower limit of 10,000, 20,000, or 25,000 g/mole, to an upper limit of 35,000, 40,000, 45,000, or 50,000 g/mole.

In one embodiment, the first composition has a weight average molecular weight ($M_w$; as determined by conv. GPC) in the range from 70,000 to 200,000 g/mole. For example, the number average molecular weight can be from a lower limit of 70,000, 75,000, or 78,000 g/mole, to an upper limit of 120,000, 140,000, 160,000, 180,000 or 200,000 g/mole.

In one embodiment, the first composition has a melt viscosity ratio, Eta*0.1 / Eta*00, in the range from 2.2 to 7.0. For example, the number average molecular weight can be from a lower limit of 2.2, 2.3, 2.4 or 2.5, to an upper limit of 6.0, 6.2, 6.5, or 7.0.

In one embodiment, the ethylene-based polymer is an ethylene/a-olefin interpolymer, and further an ethylene/a-olefin copolymer.

In one embodiment, the first ethylene-based polymer is an ethylene/a-olefin interpolymer, and further an ethylene/a-olefin copolymer.

In one embodiment, the $\alpha$-olefin has less than, or equal to, 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-butene, 1-hexene and 1-octene, and further 1-hexene and 1-octene.

In one embodiment, the ethylene-based polymer, or first ethylene-based polymer, has a molecular weight distribution ($M_w/M_n$; as determined by conv. GPC) in the range from 1.5 to 4.0, for example, from 1.5 to 3.5, or from 2.0 to 3.0. For example, the molecular weight distribution ($M_w/M_n$) can be from a lower limit of 1.5, 1.7, 2.0, 2.1, or 2.2, to an upper limit of 2.5, 2.6, 2.8, 3.0, 3.5, or 4.0.

In one embodiment, the first composition further comprises a second ethylene-based polymer. In a further embodiment, the second ethylene-based polymer is an ethylene/a-olefin interpolymer, and further an ethylene/a-olefin copolymer, or a LDPE.

In one embodiment, the $\alpha$-olefin has less than, or equal to, 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-butene, 1-hexene and 1-octene, and further 1-hexene and 1-octene.

In one embodiment, the second ethylene-based polymer is a heterogeneously branched ethylene/a-olefin interpolymer, and further a heterogeneously branched ethylene/a-olefin copolymer. Heterogeneously branched ethylene/a-olefin interpolymers and copolymers are typically produced using Ziegler/Natta type catalyst system, and have more comonomer distributed in the lower molecular weight molecules of the polymer.

In one embodiment, the second ethylene-based polymer has a molecular weight distribution ($M_w/M_n$) in the range from 3.0 to 5.0, for example from 3.2 to 4.6. For example, the molecular weight distribution ($M_w/M_n$) can be from a lower limit of 3.2, 3.3, 3.5, 3.7, or 3.9, to an upper limit of 4.6, 4.7, 4.8, 4.9, or 5.0.

The first composition comprising at least one ethylene-based polymer and having a MWCDI value greater than 0.9, and a melt index ratio (110/12) that meets the following equation: 110/12 $\geq$ 7.0 - 1.2 x log (12) comprises 80 to 95 weight percent of resin, based on the weight of resin. In some embodiments, the first composition comprises 85 to 93 weight percent of the resin, based on the weight of the resin.

*Polymerization*

With regard to polymerization of the first composition (used in the tie layer resin) comprising at least one ethylene-based polymer with the first composition having a MWCDI value greater than 0.9, and a melt index ratio (110/12) that meets the following equation: 110/12 ≥ 7.0 - 1.2 x log (12), polymerization processes include, but are not limited to, solution polymerization processes, using one or more conventional reactors, e.g., loop reactors, isothermal reactors, adiabatic reactors, stirred tank reactors, autoclave reactors in parallel, series, and/or any combinations thereof. The ethylene based polymer compositions may, for example, be produced via solution phase polymerization processes, using one or more loop reactors, adiabatic reactors, and combinations thereof.

In general, the solution phase polymerization process occurs in one or more well mixed reactors, such as one or more loop reactors and/or one or more adiabatic reactors at a temperature in the range from 115 to 250°C; for example, from 135 to 200°C, and at pressures in the range of from 2.07 MPa to 6.89 MPa (300 to 1000 psig), for example, from 3.10 MPa to 5.17 MPa (450 to 750 psig).

In one embodiment, the ethylene based polymer composition (e.g., the first composition comprising at least one ethylene-based polymer with the first composition having a MWCDI value greater than 0.9, and a melt index ratio (110/12) that meets the following equation: 110/12 ≥ 7.0 - 1.2 x log (12)) may be produced in two loop reactors in series configuration, the first reactor temperature is in the range from 115 to 200°C, for example, from 135 to 165°C, and the second reactor temperature is in the range from 150 to 210°C, for example, from 185 to 200°C. In another embodiment, the ethylene based polymer composition may be produced in a single reactor, the reactor temperature is in the range from 115 to 200°C, for example from 130 to 190°C. The residence time in a solution phase polymerization process is typically in the range from 2 to 40 minutes, for example from 5 to 20 minutes. Ethylene, solvent, one or more catalyst systems, optionally one or more cocatalysts, and optionally one or more comonomers, are fed continuously to one or more reactors. Exemplary solvents include, but are not limited to, isoparaffins. For example, such solvents are commercially available under the name ISOPAR E from ExxonMobil Chemical. The resultant mixture of the ethylene based polymer composition and solvent is then removed from the reactor or reactors, and the ethylene based polymer composition is isolated. Solvent is typically recovered via a solvent recovery unit, i.e., heat exchangers and separator vessel, and the solvent is then recycled back into the polymerization system.

In one embodiment, the ethylene based polymer composition may be produced, via a solution polymerization process, in a dual reactor system, for example a dual loop reactor system, wherein ethylene, and optionally one or more α-olefins, are polymerized in the presence of one or more catalyst systems, in one reactor, to produce a first ethylene-based polymer, and ethylene, and optionally one or more α-olefins, are polymerized in the presence of one or more catalyst systems, in a second reactor, to produce a second ethylene-based polymer. Additionally, one or more cocatalysts may be present.

In another embodiment, the ethylene based polymer composition may be produced via a solution polymerization process, in a single reactor system, for example, a single loop reactor system, wherein ethylene, and optionally one or more α-olefins, are polymerized in the presence of one or more catalyst systems. Additionally, one or more cocatalysts may be present.

The process for forming a composition comprising at least two ethylene-based polymers can comprise the following:

polymerizing ethylene, and optionally at least one comonomer, in solution, in the present of a catalyst system comprising a metal-ligand complex of Structure I, to form a first ethylene-based polymer; and
polymerizing ethylene, and optionally at least one comonomer, in the presence of a catalyst system comprising a Ziegler/Natta catalyst, to form a second ethylene-based polymer; and wherein Structure I is as follows:

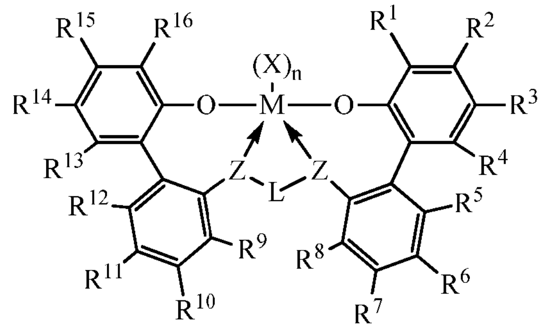

(I),

wherein:

M is titanium, zirconium, or hafnium, each, independently, being in a formal oxidation state of +2, +3, or +4; and n is an integer from 0 to 3, and wherein when n is 0, X is absent; and
each X, independently, is a monodentate ligand that is neutral, monoanionic, or dianionic; or two Xs are taken together to form a bidentate ligand that is neutral, monoanionic, or dianionic; and
X and n are chosen, in such a way, that the metal-ligand complex of formula (I) is, overall, neutral; and
each Z, independently, is O, S, N($C_1$-$C_{40}$)hydrocarbyl, or P($C_1$-$C_{40}$)hydrocarbyl; and
wherein the Z-L-Z fragment is comprised of formula (1):

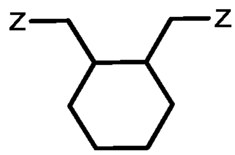
(1);

$R^1$ through $R^{16}$ are each, independently, selected from the group consisting of the following: a substituted or unsubstituted ($C_1$-$C_{40}$)hydrocarbyl, a substituted or unsubstituted ($C_1$-$C_{40}$)heterohydrocarbyl, $Si(R^C)_3$, $Ge(R^C)_3$, $P(R^P)_2$, $N(R^N)_2$, $OR^C$, $SR^C$, $NO_2$, CN, $CF_3$, $R^CS(O)$-, $R^CS(O)_2$-, $(R^C)_2C$=N-, $R^CC(O)O$-, $R^COC(O)$-, $R^CC(O)N(R)$-, $(R^C)_2NC(O)$-, halogen atom, hydrogen atom; and wherein each $R^C$ is independently a (C1-C30)hydrocarbyl; $R^P$ is a (C1-C30)hydrocarbyl; and $R^N$ is a (C1-C30)hydrocarbyl; and
wherein, optionally, two or more R groups (from $R^1$ through $R^{16}$) can combine together into one or more ring structures, with such ring structures each, independently, having from 3 to 50 atoms in the ring, excluding any hydrogen atom.

In another embodiment, the process can comprise polymerizing ethylene, and optionally at least one $\alpha$-olefin, in solution, in the presence of a catalyst system comprising a metal-ligand complex of Structure I, to form a first ethylene-based polymer; and polymerizing ethylene, and optionally at least one $\alpha$-olefin, in the presence of a catalyst system comprising a Ziegler/Natta catalyst, to form a second ethylene-based polymer. In a further embodiment, each $\alpha$-olefin is independently a C1-C8 $\alpha$-olefin.

In one embodiment, optionally, two or more R groups from $R^9$ through $R^{13}$, or $R^4$ through $R^8$ can combine together into one or more ring structures, with such ring structures each, independently, having from 3 to 50 atoms in the ring, excluding any hydrogen atom.

In one embodiment, M is hafnium.

In one embodiment, $R^3$ and $R^{14}$ are each independently an alkyl, and further a C1-C3 alkyl, and further methyl.

In one embodiment, $R^1$ and $R^{16}$ are each as follows:

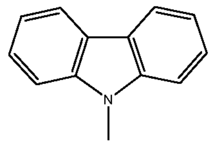
.

In one embodiment, each of the aryl, heteroaryl, hydrocarbyl, heterohydrocarbyl, $Si(R^C)_3$, $Ge(R^C)_3$, $P(R^P)_2$, $N(R^N)_2$, $OR^C$, $SR^C$, $R^CS(O)$-, $R^CS(O)_2$-, $(R^C)_2C$=N-, $R^CC(O)O$-, $R^COC(O)$-, $R^CC(O)N(R)$-, $(R^C)_2NC(O)$-, hydrocarbylene, and heterohydrocarbylene groups, independently, is unsubstituted or substituted with one or more $R^S$ substituents; and each $R^S$ independently is a halogen atom, polyfluoro substitution, perfluoro substitution, unsubstituted ($C_1$-$C_{18}$)alkyl, $F_3C$-, $FCH_2O$-, $F_2HCO$-, $F_3CO$-, $R_3Si$-, $R_3Ge$-, RO-, RS-, RS(O)-, $RS(O)_2$-, $R_2P$-, $R_2N$-, $R_2C$=N-, NC-, RC(O)O-, ROC(O)-, RC(O)N(R)-, or $R_2NC(O)$-, or two of the $R^S$ are taken together to form an unsubstituted ($C_1$-$C_{18}$)alkylene, wherein each R independently is an unsubstituted ($C_1$-$C_{18}$)alkyl.

In one embodiment, two or more of R1 through R16 do not combine to form one or more ring structures.

In one embodiment, the catalyst system suitable for producing the first ethylene/a-olefin interpolymer is a catalyst system comprising bis((2-oxoyl-3-(dibenzo-1H-pyrrole-1-yl)-5-(methyl)phenyl)-2-phenoxymethyl)-methylene-1,2-cyclohexanediylhafnium (IV) dimethyl, represented by the following Structure: IA:

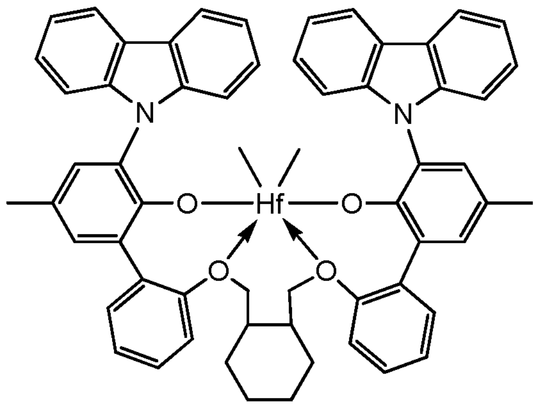

(IA).

The Ziegler/Natta catalysts suitable for use in the invention are typical supported, Ziegler-type catalysts, which are particularly useful at the high polymerization temperatures of the solution process. Examples of such compositions are those derived from organomagnesium compounds, alkyl halides or aluminum halides or hydrogen chloride, and a transition metal compound. Examples of such catalysts are described in U.S. Pat Nos. 4,612,300; 4,314,912; and 4,547,475.

Particularly suitable organomagnesium compounds include, for example, hydrocarbon soluble dihydrocarbylmagnesium, such as the magnesium dialkyls and the magnesium diaryls. Exemplary suitable magnesium dialkyls include, particularly, n-butyl-sec-butylmagnesium, diisopropylmagnesium, di-n-hexylmagnesium, isopropyl-n-butylmagnesium, ethyl-n-hexyl-magnesium, ethyl-n-butylmagnesium, di-n-octylmagnesium, and others, wherein the alkyl has from 1 to 20 carbon atoms. Exemplary suitable magnesium diaryls include diphenylmagnesium, dibenzylmagnesium and ditolylmagnesium. Suitable organomagnesium compounds include alkyl and aryl magnesium alkoxides and aryloxides and aryl and alkyl magnesium halides, with the halogen-free organomagnesium compounds being more desirable.

Halide sources include active non-metallic halides, metallic halides, and hydrogen chloride. Suitable non-metallic halides are represented by the formula R'X, wherein R' is hydrogen or an active monovalent organic radical, and X is a halogen. Particularly suitable non-metallic halides include, for example, hydrogen halides and active organic halides, such as t-alkyl halides, allyl halides, benzyl halides and other active hydrocarbyl halides. By an active organic halide is meant a hydrocarbyl halide that contains a labile halogen at least as active, i.e., as easily lost to another compound, as the halogen of sec-butyl chloride, preferably as active as t-butyl chloride. In addition to the organic monohalides, it is understood that organic dihalides, trihalides and other polyhalides that are active, as defined hereinbefore, are also suitably employed. Examples of preferred active non-metallic halides, include hydrogen chloride, hydrogen bromide, t-butyl chloride, t-amyl bromide, allyl chloride, benzyl chloride, crotyl chloride, methylvinyl carbinyl chloride, a-phenylethyl bromide, diphenyl methyl chloride, and the like. Most preferred are hydrogen chloride, t-butyl chloride, allyl chloride and benzyl chloride.

Suitable metallic halides include those represented by the formula MRy-a Xa, wherein: M is a metal of Groups IIB, IIIA or IVA of Mendeleev's periodic Table of Elements; R is a monovalent organic radical; X is a halogen; y has a value corresponding to the valence of M; and "a" has a value from 1 to y. Preferred metallic halides are aluminum halides of the formula $AlR_{3-a}X_a$, wherein each R is independently hydrocarbyl, such as alkyl; X is a halogen; and a is a number from 1 to 3. Most preferred are alkylaluminum halides, such as ethylaluminum sesquichloride, diethylaluminum chloride, ethylaluminum dichloride, and diethylaluminum bromide, with ethylaluminum dichloride being especially preferred. Alternatively, a metal halide, such as aluminum trichloride, or a combination of aluminum trichloride with an alkyl aluminum halide, or a trialkyl aluminum compound may be suitably employed.

Any of the conventional Ziegler-Natta transition metal compounds can be usefully employed, as the transition metal component in preparing the supported catalyst component. Typically, the transition metal component is a compound of a Group IVB, VB, or VIB metal. The transition metal component is generally, represented by the formulas: $TrX'_{4-q}$ (OR1)q, $TrX'_{4-q}$ (R2)q, $VOX'_3$ and $VO(OR)_3$.

Tr is a Group IVB, VB, or VIB metal, preferably a Group IVB or VB metal, preferably titanium, vanadium or zirconium; q is 0 or a number equal to, or less than, 4; X' is a halogen, and $R^1$ is an alkyl group, aryl group or cycloalkyl group having from 1 to 20 carbon atoms; and R2 is an alkyl group, aryl group, aralkyl group, substituted aralkyls, and the like.

The aryl, aralkyls and substituted aralkys contain 1 to 20 carbon atoms, preferably 1 to 10 carbon atoms. When the transition metal compound contains a hydrocarbyl group, R2, being an alkyl, cycloalkyl, aryl, or aralkyl group, the hydrocarbyl group will preferably not contain an H atom in the position beta to the metal carbon bond. Illustrative, but nonlimiting, examples of aralkyl groups are methyl, neopentyl, 2,2-dimethylbutyl, 2,2-dimethylhexyl; aryl groups such

as benzyl; cycloalkyl groups such as 1-norbornyl. Mixtures of these transition metal compounds can be employed if desired.

Illustrative examples of the transition metal compounds include $TiCl_4$, $TiBr_4$, $Ti(OC_2H_5)_3Cl$, $Ti(OC_2H_5)Cl_3$, $Ti(OC_4H_9)_3Cl$, $Ti(OC_3H_7)_2Cl._2$, $Ti(OC_6H_{13})_2Cl_2$, $Ti(OC_8H_{17})_2Br_2$, and $Ti(OC_{12}H_{25})Cl_3$, $Ti(O-iC_3H_7)_4$, and $Ti(O-nC_4H_9)_4$. Illustrative examples of vanadium compounds include $VCl_4$, $VOCl_3$, $VO(OC_2H_5)_3$, and $VO(OC_4H_9)_3$. Illustrative examples of zirconium compounds include ZrCl4, $ZrCl_3(OC_2H_5)$, $ZrCl_2(OC_2H_5)_2$, $ZrCl(OC_2H_5)_3$, $Zr(OC_2H_5)_4$, $ZrCl_3(OC_4H_9)$, $ZrCl_2(OC_4H_9)_2$, and $ZrCl(OC_4H_9)3$.

An inorganic oxide support may be used in the preparation of the catalyst, and the support may be any particulate oxide, or mixed oxide which has been thermally or chemically dehydrated, such that it is substantially free of adsorbed moisture. See U. S. Pat Nos. 4,612,300; 4,314,912; and 4,547,475.

*Co-catalyst Component*

The above described catalyst systems can be rendered catalytically active by contacting it to, or combining it with, the activating co-catalyst, or by using an activating technique, such as those known in the art, for use with metal-based olefin polymerization reactions. Suitable activating co-catalysts, for use herein, include alkyl aluminums; polymeric or oligomeric alumoxanes (also known as aluminoxanes); neutral Lewis acids; and non-polymeric, non-coordinating, ion-forming compounds (including the use of such compounds under oxidizing conditions). A suitable activating technique is bulk electrolysis. Combinations of one or more of the foregoing activating co-catalysts and techniques are also contemplated. The term "alkyl aluminum" means a monoalkyl aluminum dihydride or monoalkylaluminum dihalide, a dialkyl aluminum hydride or dialkyl aluminum halide, or a trialkylaluminum. Aluminoxanes and their preparations are known at, for example, U.S. Patent 6,103,657. Examples of preferred polymeric or oligomeric alumoxanes are methylalumoxane, triisobutylaluminum-modified methylalumoxane, and isobutylalumoxane.

Exemplary Lewis acid activating co-catalysts are Group 13 metal compounds containing from 1 to 3 hydrocarbyl substituents as described herein. In some embodiments, exemplary Group 13 metal compounds are tri(hydrocarbyl)-substituted-aluminum or tri(hydrocarbyl)-boron compounds. In some other embodiments, exemplary Group 13 metal compounds are tri(hydrocarbyl)-substituted-aluminum or tri(hydrocarbyl)-boron compounds are tri(($C_1$-$C_{10}$)alkyl)aluminum or tri(($C_6$-$C_{18}$)aryl)boron compounds and halogenated (including perhalogenated) derivatives thereof. In some other embodiments, exemplary Group 13 metal compounds are tris(fluoro-substituted phenyl)boranes, in other embodiments, tris(pentafluorophenyl)borane. In some embodiments, the activating co-catalyst is a tris(($C_1$-$C_{20}$)hydrocarbyl) borate (e.g., trityl tetrafluoroborate) or a tri(($C_1$-$C_{20}$)hydrocarbyl)ammonium tetra(($C_1$-$C_{20}$)hydrocarbyl)borane (e.g., bis(octadecyl)methylammonium tetrakis(pentafluorophenyl)borane). As used herein, the term "ammonium" means a nitrogen cation that is a (($C_1$-$C_{20}$)hydrocarbyl)$_4N^+$, a (($C_1$-$C_{20}$)hydrocarbyl)$_3N(H)^+$, a (($C_1$-$C_{20}$)hydrocarbyl)$_2N(H)_2{}^+$, ($C_1$-$C_{20}$)hydrocarbyl$N(H)_3{}^+$, or $N(H)_4{}^+$, wherein each ($C_1$-$C_{20}$)hydrocarbyl may be the same or different.

Exemplary combinations of neutral Lewis acid activating co-catalysts include mixtures comprising a combination of a tri(($C_1$-$C_4$)alkyl)aluminum and a halogenated tri(($C_6$-$C_{18}$)aryl)boron compound, especially a tris(pentafluorophenyl)borane. Other exemplary embodiments are combinations of such neutral Lewis acid mixtures with a polymeric or oligomeric alumoxane, and combinations of a single neutral Lewis acid, especially tris(pentafluorophenyl)borane with a polymeric or oligomeric alumoxane. Exemplary embodiments ratios of numbers of moles of (metal-ligand complex):(tris(pentafluoro-phenylborane): (alumoxane) [e.g., (Group 4 metal-ligand complex):(tris(pentafluoro-phenylborane):(alumoxane)] are from 1:1:1 to 1:10:30, other exemplary embodiments are from 1:1:1.5 to 1:5:10.

Many activating co-catalysts and activating techniques have been previously taught, with respect to different metal-ligand complexes, in the following U.S. patents: US 5,064,802; US 5,153,157; US 5,296,433; US 5,321,106; US 5,350,723; US 5,425,872; US 5,625,087; US 5,721,185; US 5,783,512; US 5,883,204; US 5,919,983; US 6,696,379; and US 7,163,907. Examples of suitable hydrocarbyloxides are disclosed in US 5,296,433. Examples of suitable Bronsted acid salts for addition polymerization catalysts are disclosed in US 5,064,802; US 5,919,983; US 5,783,512. Examples of suitable salts of a cationic oxidizing agent and a non-coordinating, compatible anion, as activating co-catalysts for addition polymerization catalysts, are disclosed in US 5,321,106. Examples of suitable carbenium salts as activating co-catalysts for addition polymerization catalysts are disclosed in US 5,350,723. Examples of suitable silylium salts, as activating co-catalysts for addition polymerization catalysts, are disclosed in US 5,625,087. Examples of suitable complexes of alcohols, mercaptans, silanols, and oximes with tris(pentafluorophenyl)borane are disclosed in US 5,296,433. Some of these catalysts are also described in a portion of US 6,515,155 B1, beginning at column 50, at line 39, and going through column 56, at line 55.

In some embodiments, the above described catalyst systems can be activated to form an active catalyst composition by combination with one or more cocatalyst, such as a cation forming cocatalyst, a strong Lewis acid, or a combination thereof. Suitable cocatalysts for use include polymeric or oligomeric aluminoxanes, especially methyl aluminoxane, as well as inert, compatible, noncoordinating, ion forming compounds. Exemplary suitable cocatalysts include, but are not limited to, modified methyl aluminoxane (MMAO), bis(hydrogenated tallow alkyl)methyl, tetrakis(pentafluorophenyl)borate(1-) amine, triethyl aluminum (TEA), and any combinations thereof.

In some embodiments, one or more of the foregoing activating co-catalysts are used in combination with each other. In one embodiment, a combination of a mixture of a tri(($C_1$-$C_4$)hydrocarbyl)aluminum, tri(($C_1$-$C_4$)hydrocarbyl)borane, or an ammonium borate with an oligomeric or polymeric alumoxane compound, can be used.

Resin for Tie Layer - Maleic Anhydride Grafted Polyethylene

The resin further comprises a maleic anhydride grafted polyethylene (MAH-g-PE). In some embodiments, the grafted polyethylene in the MAH-g-PE is a high density polyethylene (HDPE), a linear low density polyethylene (LLDPE), or a polyolefin elastomer.

The amount of maleic anhydride constituent grafted onto the polyethylene chain is greater than 0.05 weight percent to 3 weight percent (based on the weight of the polyethylene), as determined by titration analysis, FTIR analysis, or any other appropriate method. More preferably, this amount is 0.6 to 2.7 weight percent based on the weight of the polyethylene. In some embodiments, the amount of maleic anhydride grafted constituents is 1.0 to 2.0 weight percent based on the weight of the polyethylene. The amount of maleic anhydride grafted constituents is 1.0 to 1.6 weight percent, in some embodiments, based on the weight of the polyethylene.

In some embodiments, the MAH-g-PE has a melt index ($I_2$) of 0.2 g/10 minutes to 15 g/10 minutes. All individual values and subranges between 0.2 and 15 g/10 minutes are included herein and disclosed herein. For example, the MAH-g-PE can have a melt index from a lower limit of 0.2, 1, 2, 3, 4, 5, 6, 7, 8, 9, 10, or 11 g/10 minutes to an upper limit of 5, 6, 7, 8, 9, 10, 11, 12, 13, 14, or 15 g/10 minutes. The MAH-g-PE has a melt index ($I_2$) of 2 to 15 g/10 minutes in some embodiments. The MAH-g-PE has a melt index ($I_2$) of 5 to 15 g/10 minutes in some embodiments. In some embodiments, the MAH-g-PE has a melt index ($I_2$) of 7 to 15 g/10 minutes.

The graft process for MAH-g-PE can be initiated by decomposing initiators to form free radicals, including azo-containing compounds, carboxylic peroxyacids and peroxyesters, alkyl hydroperoxides, and dialkyl and diacyl peroxides, among others. Many of these compounds and their properties have been described (Reference: J. Branderup, E. Immergut, E. Grulke, eds. "Polymer Handbook," 4th ed., Wiley, New York, 1999, Section II, pp. 1-76.). It is preferable for the species that is formed by the decomposition of the initiator to be an oxygen-based free radical. It is more preferable for the initiator to be selected from carboxylic peroxyesters, peroxyketals, dialkyl peroxides, and diacyl peroxides. Some of the more preferable initiators, commonly used to modify the structure of polymers, are listed in US Patent No. 7,897,689, in the table spanning Col. 48 line 13 - Col. 49 line 29. Alternatively, the grafting process for MAH-g-PE can be initiated by free radicals generated by thermal oxidative process.

Examples of MAH-g-PE that can be used in the tie layer resin include those commercially available from The Dow Chemical Company under the trade name AMPLIFY™ such as AMPLIFY™ TY 1060H, AMPLIFY™ TY 1053H, AMPLIFY™ TY 1057H, and others.

The MAH-g-PE comprises 5 to 20 weight percent of resin, based on the weight of resin. In some embodiments, the MAH-g-PE comprises 7 to 15 weight percent of the resin, based on the weight of the resin.

Resin for Tie Layer - Other Polymers

In some embodiments, the resin for use in a tie layer may further comprise other polymers.

For example, in some embodiments, in addition to the first composition described above and the MAH-g-PE, the resin for use as a tie layer may further comprise a polyolefin elastomer. For example, polyolefin elastomer may be provided to reduce the rigidity and/or improve the adhesion of the tie layer formed from the resin. In some embodiments, the polyolefin elastomer can be a block copolymer. In some embodiments where polyolefin elastomer is used in the resin, the resin can comprise 1 to 50 weight percent of the polyolefin elastomer based on the total weight of the resin. In some embodiments where polyolefin elastomer is used in the resin, the resin can comprise 5 to 20 weight percent of the polyolefin elastomer based on the total weight of the resin. Examples of commercially available polyolefin elastomers can be used in some embodiments of the present invention include, polyolefin elastomers available from The Dow Chemical Company under the names ENGAGE™, such as ENGAGE™ 8402, ENGAGE™ 8200, and ENGAGE™ 8100, and AFFINITY™, such as AFFINITY™ EG 8100G, and AFFINITY™ 1880.

Small amounts of other polymers can also be used in some embodiments. In some embodiments, such polymers can be provided in amounts of less than 5 weight percent.

The resin for use in a tie layer can be prepared from the components discussed above using techniques known to those of skill in the art based on the teachings herein. In some embodiments, the components of the resin can be melt blended and formed into pellets. Such pellets can then be provided to film converters for use in a tie layer in a multilayer film. In some embodiments, the components can be blended inline in an extruder or similar film forming apparatus to form a tie layer in a multilayer film.

Barrier Layer

In embodiments of the present invention related to multilayer structures, a tie layer formed from a resin of the present invention can be in adhering contact with a barrier layer. In such embodiments, the tie layer may be referred to as Layer B, and may be positioned between the barrier layer (referred to as Layer C) and another layer (Layer A, discussed below) in an A/B/C arrangement.

The barrier layer (Layer C) may comprise one or more polyamides (nylons), amorphous polyamides (nylons), and/or ethylene vinyl alcohol copolymers (EVOH), and can include scavenger materials and compounds of heavy metals like cobalt with MXD6 nylon. EVOH includes a vinyl alcohol copolymer having 27 to 44 mol% ethylene, and is prepared by, for example, hydrolysis of vinyl acetate copolymers. Examples of commercially available EVOH that can be used in embodiments of the present invention include EVAL™ from Kuraray and Noltex™ and Soarnol™ from Nippon Goshei.

In some embodiments, the barrier layer can comprise EVOH and an anhydride and/or carboxylic acid functionalized ethylene/alpha-olefin interpolymer, such as those barrier layers disclosed in PCT Publication No. WO 2014/113623. This inclusion of anhydride and/or carboxylic acid functionalized ethylene/alpha-olefin interpolymer can enhance the flex crack resistance of the EVOH, and is believed to provide less points of stress at the interlayer with the tie resin, hence decreasing formation of voids that could negatively impact the gas barrier properties of the overall multilayer structure.

In embodiments where the barrier layer comprises polyamide, the polyamide can include polyamide 6, polyamide 9, polyamide 10, polyamide 11, polyamide 12, polyamide 5,6, polyamide 6/66 and aromatic polyamide such as polyamide 61, polyamide 6T, MXD6, or combinations thereof.

In some embodiments, tie layers formed from a resin of the present invention can be in adhering contact with a top facial surface and/or a bottom facial surface of a barrier layer.

Other Layers

In some embodiments, a tie layer formed from a resin of the present invention can be in adhering contact with another layer (e.g., Layer A in an A/B/C arrangement where Layer B is a tie layer and Layer C is a barrier layer), in addition to a barrier layer. For example, in some embodiments, the tie layer can additionally be in adhering contact with a layer comprising polyethylene (i.e., the tie layer is between the polyethylene layer and the barrier layer). In such an embodiment, the polyethylene can be any polyethylene and its derivatives (e.g., ethylene-propylene copolymer) known to those of skill in the art to be suitable for use as a layer in a multilayer structure based on the teachings herein. The polyethylene can be used in such a layer, as well as other layers in the multilayer structure, in some embodiments, can be ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), enhanced polyethylene, the first composition as described above in connection with the tie layer resin, homogeneously branched ethylene/a-olefin copolymers made with a single site catalyst such as a metallocene catalyst or a constrained geometry catalyst, enhanced polyethylene, and combinations thereof.

Some embodiments of multilayer structures can include layers beyond those described above. For example, while not necessarily in adhering contact with a tie layer according to the present invention, a multilayer structure can further comprise other layers typically included in multilayer structures depending on the application including, for example, other barrier layers, sealant layers, other tie layers, other polyethylene layers, polypropylene layers, etc. For example, in some embodiments, a multilayer structure of the present invention can include both an inventive tie layer (e.g., a tie layer formed from a resin of the present invention) and a conventional tie layer. As to conventional tie layers, the conventional tie layer can be any tie layer known to those of skill in the art to be suitable for use in adhering different layers in a multilayer structure based on the teachings herein.

Additionally, other layers such as printed, high modulus, high gloss layers may be laminated to multilayer structures (e.g., films) of the present invention. Further, in some embodiments, the multi-layer structure can be extrusion coated to a fiber containing substrate such as paper.

Additives

It should be understood that any of the foregoing layers, including the resin for use as a tie layer, can further comprise one or more additives as known to those of skill in the art such as, for example, antioxidants, ultraviolet light stabilizers, thermal stabilizers, slip agents, antiblock, pigments or colorants, processing aids, crosslinking catalysts, flame retardants, fillers and foaming agents.

Multilayer Structures

Tie layers formed from resins of the present invention can be incorporated in a variety of multilayer structures. Such tie layers are particularly useful in multilayer structures where a combination of adhesion between different layers and improved toughness is desired. A number of examples of such structures are disclosed elsewhere in the present application. Such structures can include a number of other layers as will be apparent to those of skill in the art based on the teachings herein.

A multilayer structure can comprise up to 3, 4, 5, 6, 7, 8, 9, 10, or 11 layers in various embodiments.

For example, in one embodiment, a multilayer structure of the present invention can have an A/B/C/B/E structure as follows: polyethylene/inventive tie layer/barrier layer (EVOH or polyamide)/inventive tie layer/polyethylene.

Some of the above exemplary multilayer structures have polyethylene layers that are identified using different layer designations (e.g., in the first example, Layers A and E are each polyethylene layers). It should be understood that in some embodiments, such polyethylene layers can be formed from the same polyethylene, or polyethylene blends, while in other embodiments, such polyethylene layers can be formed from different polyethylenes or polyethylene blends. In some embodiments, such polyethylene layers (e.g., in the first example, Layers A and E) can be the outermost layers or skin layers. In other embodiments, the multilayer structure may comprise one or more additional layers adjacent to such polyethylene layers. It should be understood that for the examples above, the first and last layers identified for each example may be the outermost layer in some embodiments, while in other embodiments, one or more additional layers may be adjacent to such layers.

When a multilayer structure comprising the combinations of layers disclosed herein is a multilayer film, the film can have a variety of thicknesses depending, for example, on the number of layers, the intended use of the film, and other factors. In some embodiments, multilayer films of the present invention have a thickness of 15 microns to 5 millimeters. Multilayer films of the present invention, in some embodiments, have a thickness of 20 to 500 microns (preferably 50-200 microns). When the multilayer structure is something other than a film (e.g., a rigid container, a pipe, etc.), such structures can have a thickness within the ranges typically used for such types of structures.

In some embodiments of multilayer structures, a tie layer formed from one of the inventive resins described herein comprises at least 2.5% of the total thickness of the multilayer structure. In some embodiments, such a tie layer comprises up to 20% of the total thickness of multilayer structure. A tie layer formed from one of the inventive resins described herein comprises 2.5% to 5% of the total thickness of the multilayer structure in some embodiments.

In some embodiments, the use of the inventive resins as tie layers in a multilayer structure can allow for a potential reduction in other layers such as polyamide layers or polyethylene layers. In some embodiments, the weight of a tie layer formed from one of the inventive resins is up to 400% of the weight of a layer comprising polyamide and/or ethylene vinyl alcohol. The tie layer can be in adhering contact with the nylon and/or ethylene vinyl alcohol layer in some embodiments (the tie layer is Layer B and the nylon and/or EVOH layer is Layer C in an A/B/C/etc. arrangement).

Multilayer structures of the present invention can exhibit one or more desirable properties. For example, in some embodiments, multilayer structures can exhibit desirable adhesion properties, dart impact values, puncture resistance values, tear strength, barrier properties, and others. In particular, in some embodiments, multilayer structures can exhibit improved toughness as illustrated by dart impact values and puncture strength values due to the inclusion of a tie layer formed from the tie layer resins disclosed herein.

In some embodiments, a tie layer formed from an inventive tie layer resin exhibits a normalized dart impact value at least twice the normalized dart value of the multilayer structure when measured according to ASTM D1709 (Method A). A tie layer formed from an inventive tie layer resin, in some embodiments, exhibits a normalized dart impact value at least three times the normalized dart value of the multilayer structure when measured according to ASTM D1709 (Method A). In some embodiments, a tie layer formed from an inventive tie layer resin exhibits a normalized dart impact value up to ten times the normalized dart value of the multilayer structure when measured according to ASTM D1709 (Method A). For example, in a 3 layer film structure (A/B/C), with Layer B being formed from the tie layer resin, Layer B can exhibit a normalized dart impact value at least twice the normalized dart impact value of the entire film structure. For this comparison, the normalized dart impact value of the tie layer (Layer B) is determined by measuring the normalized dart impact of a monolayer film formed from the same tie layer resin used in Layer B of the multilayer structure. The normalized dart impact values are normalized to a 1 mil film thickness.

In some embodiments, a tie layer formed from an inventive tie layer resin exhibits a normalized puncture strength value higher than the normalized puncture strength value of the multilayer structure when measured according to ASTM D5748. A tie layer formed from an inventive tie layer resin, in some embodiments, exhibits a normalized puncture strength value at least twice the normalized puncture strength value of the multilayer structure when measured according to ASTM D5748. In some embodiments, a tie layer formed from an inventive tie layer resin exhibits a normalized puncture strength value up to ten times the normalized puncture strength value of the multilayer structure when measured according to ASTM D5748. For example, in a 3 layer film structure (A/B/C), with Layer B being formed from the tie layer resin, Layer B can exhibit a normalized puncture strength value at least twice the normalized puncture strength value of the

entire film structure. For this comparison, the normalized puncture strength value of the tie layer (Layer B) is determined by measuring the normalized puncture strength of a monolayer film formed from the same tie layer resin used in Layer B of the multilayer structure.

In some embodiments, a tie layer formed from an inventive tie layer resin exhibits a normalized dart impact value at least twice the normalized dart value of the multilayer structure when measured according to ASTM D1709 (Method A) and a normalized puncture strength value higher than the normalized puncture strength value of the multilayer structure when measured according to ASTM D5748.

Methods of Preparing Multilayer Structures

When the multilayer structure is a multilayer film or formed from a multilayer film, such multilayer films can be coextruded as blown films or cast films using techniques known to those of skill in the art based on the teachings herein. In particular, based on the compositions of the different film layers disclosed herein, blown film manufacturing lines and cast film manufacturing lines can be configured to coextrude multilayer films of the present invention in a single extrusion step using techniques known to those of skill in the art based on the teachings herein.

Articles

Multilayer films of the present invention can be formed into a variety of articles using techniques known to those of skill in the art. Such articles include, for example, packages such as food packages, industrial and consumer packaging materials, agricultural film, liners, and others.

Examples of packages that can be formed from multilayer films of the present invention include, without limitation, sachets, stand-up pouches, bags, bag in boxes, intermediate bulk containers, flextanks, and others. The package may be used to contain, in various embodiments, solids, slurries, liquids, or gasses. Examples of foods that can be contained in food packages include, without limitation, solid foods, liquids, beverages, cooking ingredients (e.g., sugar, flour, etc.), etc.

DEFINITIONS

Unless stated to the contrary, implicit from the context, or customary in the art, all parts and percents are based on weight, and all test methods are current as of the filing date of this disclosure.

The term "composition," as used herein, includes material(s) which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities may be incorporated into and/or within the polymer.

The term "interpolymer," as used herein, refers to a polymer prepared by the polymerization of at least two different types of monomers. The generic term interpolymer thus includes copolymers (employed to refer to polymers prepared from two different types of monomers), and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise at least one polymerized comonomer.

The term, "ethylene-based polymer," as used herein, refers to a polymer that comprises a majority amount of polymerized ethylene monomer (based on the total weight of the polymer), and optionally may comprise at least one polymerized comonomer.

The term, "ethylene/$\alpha$-olefin interpolymer," as used herein, refers to an interpolymer that comprises, in polymerized form, a majority amount of ethylene monomer (based on the weight of the interpolymer), and at least one $\alpha$-olefin.

The term, "ethylene/$\alpha$-olefin copolymer," as used herein, refers to a copolymer that comprises, in polymerized form, a majority amount of ethylene monomer (based on the weight of the copolymer), and an $\alpha$-olefin, as the only two monomer types.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599392). LDPE resins typically have a density in the range of 0.916 to 0.940 g/cm$^3$.

The term "LLDPE", includes resins made using the traditional Ziegler-Natta catalyst systems as well as single-site catalysts such as bis-metallocenes (sometimes referred to as "m-LLDPE"), post-metallocene catalysts, and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art, with gas and slurry phase reactors being most preferred.

The term "MDPE" refers to polyethylenes having densities from 0.926 to 0.940 g/cm$^3$. "MDPE" is typically made using chromium or Ziegler-Natta catalysts or using metallocene, constrained geometry, or single site catalysts, and typically have a molecular weight distribution ("MWD") greater than 2.5.

The term "HDPE" refers to polyethylenes having densities greater than about 0.940 g/cm$^3$, which are generally prepared with Ziegler-Natta catalysts, chrome catalysts or even metallocene catalysts.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend.

The term "in adhering contact" and like terms mean that one facial surface of one layer and one facial surface of another layer are in touching and binding contact to one another such that one layer cannot be removed for the other layer without damage to the in-contact facial surfaces of both layers.

TEST METHODS

**Melt index**

Melt indices $I_2$ (or 12) and $I_{10}$ (or 110) were measured in accordance to ASTM D-1238 (method B) at 190°C and at 2.16 kg and 10 kg load, respectively. Their values are reported in g/10 min.

**Density**

Samples for density measurement were prepared according to ASTM D4703. Measurements were made, according to ASTM D792, Method B, within one hour of sample pressing.

**Dynamic Shear Rheology**

Each sample was compression-molded into "3 mm thick x 25 mm diameter" circular plaque, at 177°C, for five minutes, under 10 MPa pressure, in air. The sample was then taken out of the press and placed on a counter top to cool.

Constant temperature, frequency sweep measurements were performed on an ARES strain controlled rheometer (TA Instruments), equipped with 25 mm parallel plates, under a nitrogen purge. For each measurement, the rheometer was thermally equilibrated, for at least 30 minutes, prior to zeroing the gap. The sample disk was placed on the plate, and allowed to melt for five minutes at 190°C. The plates were then closed to 2 mm, the sample trimmed, and then the test was started. The method had an additional five minute delay built in, to allow for temperature equilibrium. The experiments were performed at 190°C, over a frequency range from 0.1 to 100 rad/s, at five points per decade interval. The strain amplitude was constant at 10%. The stress response was analyzed in terms of amplitude and phase, from which the storage modulus (G'), loss modulus (G"), complex modulus (G*), dynamic viscosity ($\eta$* or Eta*), and tan $\delta$ (or tan delta) were calculated.

**Conventional Gel Permeation Chromatography (conv. GPC)**

A GPC-IR high temperature chromatographic system from PolymerChar (Valencia, Spain), was equipped with a Precision Detectors (Amherst, MA), 2-angle laser light scattering detector Model 2040, an IR5 infra-red detector and a 4-capillary viscometer, both from PolymerChar. Data collection was performed using PolymerChar Instrument Control

software and data collection interface. The system was equipped with an on-line, solvent degas device and pumping system from Agilent Technologies (Santa Clara, CA).

Injection temperature was controlled at 150 degrees Celsius. The columns used, were three, 10-micron "Mixed-B" columns from Polymer Laboratories (Shropshire, UK). The solvent used was 1,2,4-trichlorobenzene. The samples were prepared at a concentration of "0.1 grams of polymer in 50 milliliters of solvent." The chromatographic solvent and the sample preparation solvent each contained "200 ppm of butylated hydroxytoluene (BHT)." Both solvent sources were nitrogen sparged. Ethylene-based polymer samples were stirred gently at 160 degrees Celsius for three hours. The injection volume was "200 microliters,' and the flow rate was "1 milliliters/minute." The GPC column set was calibrated by running 21 "narrow molecular weight distribution" polystyrene standards. The molecular weight (MW) of the standards ranges from 580 to 8,400,000 g/mole, and the standards were contained in six "cocktail" mixtures. Each standard mixture had at least a decade of separation between individual molecular weights. The standard mixtures were purchased from Polymer Laboratories. The polystyrene standards were prepared at "0.025 g in 50 mL of solvent" for molecular weights equal to, or greater than, 1,000,000 g/mole, and at "0.050 g in 50 mL of solvent" for molecular weights less than 1,000,000 g/mole.

The polystyrene standards were dissolved at 80°C, with gentle agitation, for 30 minutes. The narrow standards mixtures were run first, and in order of decreasing "highest molecular weight component," to minimize degradation. The polystyrene standard peak molecular weights were converted to polyethylene molecular weight using Equation 1 (as described in Williams and Ward, J. Polym. Sci., Polym. Letters, 6, 621 (1968)):

$$\text{Mpolyethylene} = \text{A x (Mpolystyrene)}^{\text{B}} \quad \text{(Eqn. 1)},$$

where M is the molecular weight, A is equal to 0.4316 and B is equal to 1.0.

Number-average molecular weight (Mn(conv gpc)), weight average molecular weight (Mw-conv gpc), and z-average molecular weight (Mz(conv gpc)) were calculated according to Equations 2-4 below.

$$\text{Mn(conv gpc)} = \frac{\sum_{i=RV_{integration\ start}}^{i=RV_{integration\ end}} \left(IR_{measurement\ channel_i}\right)}{\sum_{i=RV_{integration\ start}}^{i=RV_{integration\ end}} \left(IR_{measurement\ channel_i} / M_{PE_i}\right)} \quad \text{(Eqn. 2)}$$

$$\text{Mw(conv gpc)} = \frac{\sum_{i=RV_{integration\ start}}^{i=RV_{integration\ end}} \left(M_{PE_i}\ IR_{measurement\ channel_i}\right)}{\sum_{i=RV_{integration\ start}}^{i=RV_{integration\ end}} \left(IR_{measurement\ channel_i}\right)} \quad \text{(Eqn. 3)}$$

$$\text{Mz(conv gpc)} = \frac{\sum_{i=RV_{integration\ start}}^{i=RV_{integration\ end}} \left(M_{PE_i}{}^2\ IR_{measurement\ channel_i}\right)}{\sum_{i=RV_{integration\ start}}^{i=RV_{integration\ end}} \left(M_{PE_i}\ IR_{measurement\ channel_i}\right)} \quad \text{(Eqn. 4)}$$

In Equations 2-4, the RV is column retention volume (linearly-spaced), collected at "1 point per second," the IR is the baseline-subtracted IR detector signal, in Volts, from the IR5 measurement channel of the GPC instrument, and $M_{PE}$ is the polyethylene-equivalent MW determined from Equation 1. Data calculation were performed using "GPC One software (version 2.013H)" from PolymerChar.

**Creep Zero Shear Viscosity Measurement Method**

Zero-shear viscosities were obtained via creep tests, which were conducted on an AR G2 stress controlled rheometer (TA Instruments; New Castle, Del), using "25-mm-diameter" parallel plates, at 190°C. The rheometer oven was set to test temperature for at least 30 minutes, prior to zeroing the fixtures. At the testing temperature, a compression molded sample disk was inserted between the plates, and allowed to come to equilibrium for five minutes. The upper plate was then lowered down to 50 μm (instrument setting) above the desired testing gap (1.5 mm). Any superfluous material was trimmed off, and the upper plate was lowered to the desired gap. Measurements were done under nitrogen purging, at a flow rate of 5 L/min. The default creep time was set for two hours. Each sample was compression-molded into a "2 mm thick x 25 mm diameter" circular plaque, at 177°C, for five minutes, under 10 MPa pressure, in air. The sample was then taken out of the press and placed on a counter top to cool.

A constant low shear stress of 20 Pa was applied for all of the samples, to ensure that the steady state shear

rate was low enough to be in the Newtonian region. The resulting steady state shear rates were in the range from $10^{-3}$ to $10^{-4}$ $s^{-1}$ for the samples in this study. Steady state was determined by taking a linear regression for all the data, in the last 10% time window of the plot of "log (J(t)) vs. log(t)," where J(t) was creep compliance and t was creep time. If the slope of the linear regression was greater than 0.97, steady state was considered to be reached, then the creep test was stopped. In all cases in this study, the slope meets the criterion within one hour. The steady state shear rate was determined from the slope of the linear regression of all of the data points, in the last 10% time window of the plot of "ε vs. t," where ε was strain. The zero-shear viscosity was determined from the ratio of the applied stress to the steady state shear rate.

In order to determine if the sample was degraded during the creep test, a small amplitude oscillatory shear test was conducted before, and after, the creep test, on the same specimen from 0.1 to 100 rad/s. The complex viscosity values of the two tests were compared. If the difference of the viscosity values, at 0.1 rad/s, was greater than 5%, the sample was considered to have degraded during the creep test, and the result was discarded.

**Zero-Shear Viscosity Ratio** (ZSVR) is defined as the ratio of the zero-shear viscosity (ZSV) of the branched polyethylene material to the ZSV of a linear polyethylene material (see ANTEC proceeding below) at the equivalent weight average molecular weight (Mw(conv gpc)), according to the following Equation 5:

$$ZSVR = \frac{\eta_{0B}}{\eta_{0L}} = \frac{\eta_{0B}}{2.29^{-15} M_{w(conv \cdot gpc)}^{3.65}} \quad \text{(Eqn. 5).}$$

The ZSV value was obtained from creep test, at 190°C, via the method described above. The Mw(conv gpc) value was determined by the conventional GPC method (Equation 3), as discussed above. The correlation between ZSV of linear polyethylene and its Mw(conv gpc) was established based on a series of linear polyethylene reference materials. A description for the ZSV-Mw relationship can be found in the ANTEC proceeding: Karjala et al., Detection of Low Levels of Long-chain Branching in Polyolefins, Annual Technical Conference - Society of Plastics Engineers (2008), 66th 887-891.

### $^1$H NMR Method

A stock solution (3.26 g) was added to "0.133 g of the polymer sample" in 10 mm NMR tube. The stock solution was a mixture of tetrachloroethane-$d_2$ (TCE) and perchloroethylene (50:50, w:w) with 0.001M $Cr^{3+}$. The solution in the tube was purged with $N_2$, for 5 minutes, to reduce the amount of oxygen. The capped sample tube was left at room temperature, overnight, to swell the polymer sample. The sample was dissolved at 110°C with periodic vortex mixing. The samples were free of the additives that may contribute to unsaturation, for example, slip agents such as erucamide. Each $^1$H NMR analysis was run with a 10 mm cryoprobe, at 120°C, on Bruker AVANCE 400 MHz spectrometer.

Two experiments were run to get the unsaturation: the control and the double presaturation experiments. For the control experiment, the data was processed with an exponential window function with LB=1 Hz, and the baseline was corrected from 7 to -2 ppm. The signal from residual $^1$H of TCE was set to 100, and the integral $I_{total}$ from -0.5 to 3 ppm was used as the signal from whole polymer in the control experiment. The "number of $CH_2$ group, $NCH_2$," in the polymer was calculated as follows in Equation 1A:

$$NCH_2 = I_{total}/2 \quad \text{(Eqn. 1A).}$$

For the double presaturation experiment, the data was processed with an exponential window function with LB=1 Hz, and the baseline was corrected from about 6.6 to 4.5 ppm. The signal from residual $^1$H of TCE was set to 100, and the corresponding integrals for unsaturations ($I_{vinylene}$, $I_{trisubstituted}$, $I_{vinyl}$ and $I_{vinylidene}$) were integrated. It is well known to use NMR spectroscopic methods for determining polyethylene unsaturation, for example, see Busico, V., et al., Macromolecules, 2005, 38, 6988. The number of unsaturation unit for vinylene, trisubstituted, vinyl and vinylidene were calculated as follows:

$$N_{vinylene} = I_{vinylene}/2 \quad \text{(Eqn. 2A),}$$

$$N_{trisubstituted} = I_{trisubstitute} \quad \text{(Eqn. 3A),}$$

$$N_{vinyl} = I_{vinyl}/2 \quad \text{(Eqn. 4A)},$$

$$N_{vinylidene} = I_{vinylidene}/2 \quad \text{(Eqn. 5A)}.$$

The unsaturation units per 1,000 carbons, all polymer carbons including backbone carbons and branch carbons, were calculated as follows:

$$N_{vinylene}/1{,}000C = (N_{vinylene}/NCH_2)*1{,}000 \quad \text{(Eqn. 6A)},$$

$$N_{trisubstituted}/1{,}000C = (N_{trisubstituted}/NCH_2)*1{,}000 \quad \text{(Eqn. 7A)},$$

$$N_{vinyl}/1{,}000C = (N_{vinyl}/NCH_2)*1{,}000 \quad \text{(Eqn. 8A)},$$

$$N_{vinylidene}/1{,}000C = (N_{vinylidene}/NCH_2)*1{,}000 \quad \text{(Eqn. 9A)},$$

The chemical shift reference was set at 6.0 ppm for the $^{1}H$ signal from residual proton from TCE-d2. The control was run with ZG pulse, NS=4, DS=12, SWH=10,000 Hz, AQ=1.64s, D1=14s. The double presaturation experiment was run with a modified pulse sequence, with O1P = 1.354 ppm, 02P = 0.960 ppm, PL9 = 57db, PL21 = 70 db, NS = 100, DS = 4, SWH = 10,000 Hz, AQ = 1.64s, D1 = 1 s (where D1 is the presaturation time), D13 = 13s. Only the vinyl levels were reported in Table 2 below.

**$^{13}C$ NMR Method**

Samples are prepared by adding approximately 3g of a 50/50 mixture of tetrachloroethane-d2/orthodichlorobenzene, containing 0.025 M $Cr(AcAc)_3$, to a "0.25 g polymer sample" in a 10 mm NMR tube. Oxygen is removed from the sample by purging the tube headspace with nitrogen. The samples are then dissolved, and homogenized, by heating the tube and its contents to 150°C, using a heating block and heat gun. Each dissolved sample is visually inspected to ensure homogeneity.

All data are collected using a Bruker 400 MHz spectrometer. The data is acquired using a 6 second pulse repetition delay, 90-degree flip angles, and inverse gated decoupling with a sample temperature of 120°C. All measurements are made on non-spinning samples in locked mode. Samples are allowed to thermally equilibrate for 7 minutes prior to data acquisition. The 13C NMR chemical shifts were internally referenced to the EEE triad at 30.0 ppm.

C13 NMR Comonomer Content: It is well known to use NMR spectroscopic methods for determining polymer composition. ASTM D 5017-96; J. C. Randall et al., in "NMR and Macromolecules" ACS Symposium series 247; J. C. Randall, Ed., Am. Chem. Soc., Washington, D.C., 1984, Ch. 9; and J. C. Randall in "Polymer Sequence Determination", Academic Press, New York (1977) provide general methods of polymer analysis by NMR spectroscopy.

**Molecular Weighted Comonomer Distribution Index (MWCDI)**

A GPC-IR, high temperature chromatographic system from PolymerChar (Valencia, Spain) was equipped with a Precision Detectors' (Amherst, MA) 2-angle laser light scattering detector Model 2040, and an IR5 infra-red detector (GPC-IR) and a 4-capillary viscometer, both from PolymerChar. The "15-degree angle" of the light scattering detector was used for calculation purposes. Data collection was performed using PolymerChar Instrument Control software and data collection interface. The system was equipped with an on-line, solvent degas device and pumping system from Agilent Technologies (Santa Clara, CA).

Injection temperature was controlled at 150 degrees Celsius. The columns used, were four, 20-micron "Mixed-A" light scattering columns from Polymer Laboratories (Shropshire, UK). The solvent was 1,2,4-trichlorobenzene. The samples were prepared at a concentration of "0.1 grams of polymer in 50 milliliters of solvent." The chromatographic solvent and the sample preparation solvent each contained "200 ppm of butylated hydroxytoluene (BHT)." Both solvent sources were nitrogen sparged. Ethylene-based polymer samples were stirred gently, at 160 degrees Celsius, for three hours. The injection volume was "200 microliters," and the flow rate was "1 milliliters/minute."

Calibration of the GPC column set was performed with 21 "narrow molecular weight distribution" polystyrene

standards, with molecular weights ranging from 580 to 8,400,000 g/mole. These standards were arranged in six "cocktail" mixtures, with at least a decade of separation between individual molecular weights. The standards were purchased from Polymer Laboratories (Shropshire UK). The polystyrene standards were prepared at "0.025 grams in 50 milliliters of solvent" for molecular weights equal to, or greater than, 1,000,000 g/mole, and at "0.050 grams in 50 milliliters of solvent" for molecular weights less than 1,000,000 g/mole. The polystyrene standards were dissolved at 80 degrees Celsius, with gentle agitation, for 30 minutes. The narrow standards mixtures were run first, and in order of decreasing "highest molecular weight component," to minimize degradation. The polystyrene standard peak molecular weights were converted to polyethylene molecular weights using Equation 1B (as described in Williams and Ward, J. Polym. Sci., Polym. Let., 6, 621 (1968)):

$$\text{Mpolyethylene} = \text{A x (Mpolystyrene)}^{\text{B}} \quad \text{(Eqn. 1B)},$$

where M is the molecular weight, A has a value of approximately 0.40 and B is equal to 1.0. The A value was adjusted between 0.385 and 0.425 (depending upon specific column-set efficiency), such that NBS 1475A (NIST) linear polyethylene weight-average molecular weight corresponded to 52,000 g/mole, as calculated by Equation 3B, below:

$$\text{Mn(LALS gpc)} = \frac{\sum_{i=RV_{integration\ start}}^{i=RV_{integration\ end}} (IR_{measurement\ channel_i})}{\sum_{i=RV_{integration\ start}}^{i=RV_{integration\ end}} \left( {IR_{measurement\ channel_i}}/{M_{PE_i}} \right)} \quad \text{(Eqn. 2B)}$$

$$\text{Mw(LALS gpc)} = \frac{\sum_{i=RV_{integration\ start}}^{i=RV_{integration\ end}} (M_{PE_i}\ IR_{measurement\ channel_i})}{\sum_{i=RV_{integration\ start}}^{i=RV_{integration\ end}} (IR_{measurement\ channel_i})} \quad \text{(Eqn. 3B)}$$

In Equations 2B and 3B, RV is column retention volume (linearly-spaced), collected at "1 point per second." The IR is the baseline-subtracted IR detector signal, in Volts, from the measurement channel of the GPC instrument, and the $M_{PE}$ is the polyethylene-equivalent MW determined from Equation 1B. Data calculation were performed using "GPC One software (version 2.013H)" from PolymerChar.

A calibration for the IR5 detector ratios was performed using at least ten ethylene-based polymer standards (polyethylene homopolymer and ethylene/octene copolymers; narrow molecular weight distribution and homogeneous comonomer distribution) of known short chain branching (SCB) frequency (measured by the $^{13}C$ NMR Method, as discussed above), ranging from homopolymer (0 SCB/1000 total C) to approximately 50 SCB/1000 total C, where total C = carbons in backbone + carbons in branches. Each standard had a weight-average molecular weight from 36,000 g/mole to 126,000 g/mole, as determined by the GPC-LALS processing method described above. Each standard had a molecular weight distribution (Mw/Mn) from 2.0 to 2.5, as determined by the GPC-LALS processing method described above. Polymer properties for the SCB standards are shown in Table A.

Table A: "SCB" Standards

| Wt % Comonomer | IR5 Area ratio | SCB / 1000 Total C | Mw | Mw/Mn |
|---|---|---|---|---|
| 23.1 | 0.2411 | 28.9 | 37,300 | 2.22 |
| 14.0 | 0.2152 | 17.5 | 36,000 | 2.19 |
| 0.0 | 0.1809 | 0.0 | 38,400 | 2.20 |
| 35.9 | 0.2708 | 44.9 | 42,200 | 2.18 |
| 5.4 | 0.1959 | 6.8 | 37,400 | 2.16 |
| 8.6 | 0.2043 | 10.8 | 36,800 | 2.20 |
| 39.2 | 0.2770 | 49.0 | 125,600 | 2.22 |
| 1.1 | 0.1810 | 1.4 | 107,000 | 2.09 |
| 14.3 | 0.2161 | 17.9 | 103,600 | 2.20 |
| 9.4 | 0.2031 | 11.8 | 103,200 | 2.26 |

The "IR5 Area Ratio (or "IR5 $_{\text{Methyl Channel Area}}$ / IR5 $_{\text{Measurement Channel Area}}$")" of "the baseline-subtracted area response of the IR5 methyl channel sensor" to "the baseline-subtracted area response of IR5 measurement channel sensor" (standard filters and filter wheel as supplied by PolymerChar: Part Number IR5_FWM01 included as part of the GPC-IR instrument) was calculated for each of the "SCB" standards. A linear fit of the SCB frequency versus the "IR5 Area Ratio" was constructed in the form of the following Equation 4B:

$$\text{SCB/1000 total C} = A_0 + [A_1 \text{ x } (\text{IR5}_{\text{ Methyl Channel Area}} / \text{IR5}_{\text{ Measurement Channel Area}})]$$

(Eqn. 4B), where Ao is the "SCB/1000 total C" intercept at an "IR5 Area Ratio" of zero, and $A_1$ is the slope of the "SCB/1000 total C" versus "IR5 Area Ratio," and represents the increase in the "SCB/1000 total C" as a function of "IR5 Area Ratio."

A series of "linear baseline-subtracted chromatographic heights" for the chromatogram generated by the "IR5 methyl channel sensor" was established as a function of column elution volume, to generate a baseline-corrected chromatogram (methyl channel). A series of "linear baseline-subtracted chromatographic heights" for the chromatogram generated by the "IR5 measurement channel" was established as a function of column elution volume, to generate a base-line-corrected chromatogram (measurement channel).

The "IR5 Height Ratio" of "the baseline-corrected chromatogram (methyl channel)" to "the baseline-corrected chromatogram (measurement channel)" was calculated at each column elution volume index (each equally-spaced index, representing 1 data point per second at 1 ml/min elution) across the sample integration bounds. The "IR5 Height Ratio" was multiplied by the coefficient $A_1$, and the coefficient Ao was added to this result, to produce the predicted SCB frequency of the sample. The result was converted into mole percent comonomer, as follows in Equation 5B:

$$\text{Mole Percent Comonomer} = \{SCB_f / [SCB_f + ((1000 - SCB_f * \text{Length of comonomer}) / 2)]\} * 100 \quad \text{(Eqn. 5B)},$$

where "$SCB_f$" is the "SCB per 1000 total C", and the "Length of comonomer" = 8 for octene, 6 for hexene, and so forth.

Each elution volume index was converted to a molecular weight value ($Mw_i$) using the method of Williams and Ward (described above; Eqn. 1B). The "Mole Percent Comonomer (*y axis)"* was plotted as a function of Log($Mw_i$), and the slope was calculated between Mwi of 15,000 and Mwi of 150,000 g/mole (end group corrections on chain ends were omitted for this calculation). An EXCEL linear regression was used to calculate the slope between, and including, Mwi from 15,000 to 150,000 g/mole. This slope is defined as the molecular weighted comonomer distribution index (MWCDI = Molecular Weighted Comonomer Distribution Index).

*Representative Determination of MWCDI*

To illustrate determination of MWCDI, a representative determination of MWCDI is provided for a sample composition. A plot of the measured "SCB per 1000 total C (= SCBf)" versus the observed "IR5 Area Ratio" of the SCB standards was generated (see Figure 1), and the intercept (Ao) and slope ($A_1$) were determined. Here, Ao = -90.246 SCB/1000 total C; and $A_1$ = 499.32 SCB/1000 total C.

The "IR5 Height Ratio" was determined for the sample composition (see integration shown in Figure 2). This height ratio (IR5 Height Ratio of sample composition) was multiplied by the coefficient $A_1$, and the coefficient Ao was added to this result, to produce the predicted SCB frequency of this example, at each elution volume index, as described above ($A_0$ = -90.246 SCB/1000 total C; and $A_1$ = 499.32 SCB/1000 total C). The $SCB_f$ was plotted as a function of polyethylene-equivalent molecular weight, as determined using Equation 1B, as discussed above. See Figure 3 (Log Mwi used as the x-axis).

The $SCB_f$ was converted into "Mole Percent Comonomer" via Equation 5B. The "Mole Percent Comonomer" was plotted as a function of polyethylene-equivalent molecular weight, as determined using Equation 1B, as discussed above. See Figure 4 (Log Mwi used as the x-axis). A linear fit was from Mwi of 15,000 g/mole to Mwi of 150,000 g/mole, yielding a slope of "2.27 mole percent comonomer x mole/g." Thus, the MWCDI = 2.27. An EXCEL linear regression was used to calculate the slope between, and including, Mwi from 15,000 to 150,000 g/mole.

**Film Testing Conditions**

The following physical properties were measured on the films produced (see experimental section).

**ASTM D2457 Gloss**

Samples measured for gloss were prepared and measured according to ASTM D2457.

**ASTM D1003 Total Haze**

Samples measured for internal haze and overall (total) haze were sampled and prepared according to ASTM D1003. Internal haze was obtained via refractive index matching using mineral oil on both sides of the films. A Hazeguard Plus (BYK-Gardner USA; Columbia, MD) was used for testing. Surface haze was determined as the difference between total haze and internal haze. The total haze was reported as the average of five measurements.

**ASTM D1922 MD (Machine Direction) and CD (Cross Direction) Elmendorf Tear Type B**

The Elmendorf Tear test determines the average force to propagate tearing through a specified length of plastic film or non rigid sheeting, after the tear has been started, using an Elmendorf-type tearing tester.

After film production from the sample to be tested, the film was conditioned for at least 40 hours at 23°C (+/- 2°C) and 50% R.H (+/- 5) as per ASTM standards. Standard testing conditions were 23°C (+/- 2°C) and 50% R.H (+/- 5) as per ASTM standards.

The force, in grams, required to propagate tearing across a film or sheeting specimen was measured using a precisely calibrated pendulum device. In the test, acting by gravity, the pendulum swung through an arc, tearing the specimen from a precut slit. The specimen was held on one side by the pendulum and on the other side by a stationary member. The loss in energy by the pendulum was indicated by a pointer or by an electronic scale. The scale indication was a function of the force required to tear the specimen.

The sample specimen geometry used in the Elmendorf tear test was the 'constant radius geometry,' as specified in ASTM D1922. Testing is typically carried out on specimens that have been cut from both the film MD and CD directions. Prior to testing, the film specimen thickness was measured at the sample center. A total of 15 specimens per film direction were tested, and the average tear strength and average thickness reported. The average tear strength was normalized to the average thickness.

**ASTM D882 MD and CD, 1% and 2% Secant Modulus**

The film MD (Machine Direction) and CD (Cross Direction) secant modulus was determined per ASTM D882. The reported secant modulus value was the average of five measurements.

**Puncture Strength**

The Puncture test determines the resistance of a film to the penetration of a probe at a standard low rate, a single test velocity. The puncture test method is based on ASTM D5748. After film production, the film was conditioned for at least 40 hours at 23°C (+/- 2°C) and 50% R.H (+/- 5) as per ASTM standards. Standard testing conditions are 23°C (+/- 2°C) and 50% R.H (+/- 5) as per ASTM standards. Puncture was measured on a tensile testing machine. Square specimens were cut from a sheet to a size of "15.24 cm by 15.24 cm" ("6 inches by 6 inches"). The specimen was clamped in a "10.16 cm diameter" ("4 inch diameter") circular specimen holder, and a puncture probe was pushed into the centre of the clamped film at a cross head speed of 25.4 cm/minute (10 inches/minute). The internal test method follows ASTM D5748, with one modification. It deviated from the ASTM D5748 method, in that the probe used was a "1.27 cm/minute" ("0.5 inch diameter") polished steel ball on a "0.6 cm" ("0.25 inch") support rod (rather than the 1.9 cm (0.75 inch) diameter, pear shaped probe specified in D5748).

There was a "19.6 cm" ("7.7 inch") maximum travel length to prevent damage to the test fixture. There was no gauge length; prior to testing, the probe was as close as possible to, but not touching the specimen.

A single thickness measurement was made in the centre of the specimen. For each specimen, the maximum force, the force at break, the penetration distance, and the energy to break were determined. A total of five specimens were tested to determine an average puncture value. The puncture probe was cleaned using a "Kim-wipe" after each specimen.

Normalized puncture strength values are determined by dividing the puncture strength value by the thickness of the sample.

**ASTM D1709 Dart Impact**

The film Dart Drop test determines the energy that causes a plastic film to fail, under specified conditions of

impact by a free falling dart. The test result is the energy, expressed in terms of the weight of the missile falling from a specified height, which would result in the failure of 50% of the specimens tested.

After the film was produced, it was conditioned for at least 40 hours at 23°C (+/- 2°C) and 50% R.H (+/- 5), as per ASTM standards. Standard testing conditions are 23°C (+/- 2°C) and 50% R.H (+/- 5), as per ASTM standards.

The test result was reported as either by Method A, which uses a 3.8 cm (1.5") diameter dart head and 26" drop height, or by Method B, which uses a 5 cm (2") diameter dart head and 152.4 cm (60") drop height. The sample thickness was measured at the sample center, and the sample then clamped by an annular specimen holder with an inside diameter of 12.7 cm (5 inches). The dart was loaded above the center of the sample, and released by either a pneumatic or electromagnetic mechanism.

Testing was carried out according to the 'staircase' method. If the sample failed, a new sample was tested with the weight of the dart reduced by a known and fixed amount. If the sample did not fail, a new sample was tested with the weight of the dart increased by a known amount. After 20 specimens had been tested, the number of failures was determined. If this number was 10, then the test is complete. If the number was less than 10, then the testing continued, until 10 failures had been recorded. If the number was greater than 10, testing was continued, until the total of non-failures was 10. The dart impact value was determined from these data, as per ASTM D1709, and expressed in grams, as either the Dart Drop Impact of Type A or Type B (or dart impact value (Method A) or dart impact value (Method B)). In some cases, the sample dart impact value may lie between A and B. In these cases, it is not possible to obtain a quantitative dart value.

The terms "dart drop impact" and "dart impact" are used synonymously herein to refer to this test method.

Normalized dart impact values are determined by dividing the dart impact value by the thickness of the sample.

**ASTM F-904 Adhesion Strength**

Adhesion strength is determined in accordance with ASTM F-904.

Some embodiments of the invention will now be described in detail in the following Examples.

**Examples**

The following examples illustrate the present invention, but are not intended to limit the scope of the invention.

First Composition 1 and First Composition 2

The inventive tie layer resins (Inventive Resins 1-5) described in the Examples below utilize either First Composition 1 or First Composition 2, each of which comprise at least one ethylene-based polymer has a MWCDI value greater than 0.9, and a melt index ratio (110/12) that meets the following equation: 110/12 ≥ 7.0 - 1.2 x log (12). First Composition 1 and First Composition 2 each contain two ethylene-octene copolymers. Each composition was prepared, via solution polymerization, in a dual series loop reactor system according to U.S. Pat. No. 5,977,251 (see Figure 2 of this patent), in the presence of a first catalyst system, as described below, in the first reactor, and a second catalyst system, as described below, in the second reactor.

The first catalyst system comprised a bis((2-oxoyl-3-(dibenzo-1H-pyrrole-1-yl)-5-(methyl)phenyl)-2-phenoxymethyl)-methylene-1,2-cyclohexanediylhafnium (IV) dimethyl, represented by the following formula (CAT 1):

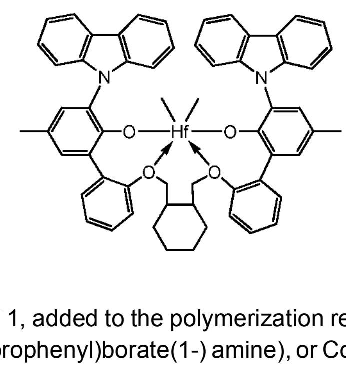

(CAT 1).

The molar ratios of the metal of CAT 1, added to the polymerization reactor, in-situ, to that of Cocat1 (bis(hydrogenated tallow alkyl)methyl,tetrakis(pentafluorophenyl)borate(1-) amine), or Cocat2 (modified methyl aluminoxane (MMAO)), are shown in Table 1.

The second catalyst system comprised a Ziegler-Natta type catalyst (CAT 2). The heterogeneous Ziegler-Natta type catalyst-premix was prepared substantially according to U.S. Pat. No. 4,612,300, by sequentially adding to a volume of ISOPAR E, a slurry of anhydrous magnesium chloride in ISOPAR E, a solution of $EtAlCl_2$ in heptane, and a solution

of $Ti(O\text{-}iPr)_4$ in heptane, to yield a composition containing a magnesium concentration of 0.20M, and a ratio of Mg/Al/Ti of 40/12.5/3. An aliquot of this composition was further diluted with ISOPAR-E to yield a final concentration of 500 ppm Ti in the slurry. While being fed to, and prior to entry into, the polymerization reactor, the catalyst premix was contacted with a dilute solution of $Et_3Al$, in the molar Al to Ti ratio specified in Table 1, to give the active catalyst.

The polymerization conditions for First Compositions 1 and 2 are reported in Table 1. As seen in Table 1, Cocat. 1 (bis(hydrogenated tallow alkyl)methyl,tetrakis(pentafluorophenyl)borate(1-) amine); and Cocat. 2 (modified methyl aluminoxane (MMAO)) were each used as a cocatalyst for CAT 1. Additional properties of First Compositions 1 and 2 are measured, and are reported in Table 2. Each polymer composition was stabilized with minor (ppm) amounts of stabilizers.

**Table 1**: Polymerization Conditions (Rx1 = reactor 1; Rx2 = reactor 2)

| Sample # | Units | First Composition 1 | First Composition 2 |
|---|---|---|---|
| Reactor Configuration | Type | Dual Series | Dual Series |
| Comonomer type | Type | 1-octene | 1-octene |
| First Reactor Feed Solvent / Ethylene Mass Flow Ratio | g/g | 5.5 | 4.0 |
| First Reactor Feed Comonomer / Ethylene Mass Flow Ratio | g/g | 0.39 | 0.47 |
| First Reactor Feed Hydrogen / Ethylene Mass Flow Ratio | g/g | 3.8E-04 | 3.0E-04 |
| First Reactor Temperature | °C | 140 | 165 |
| First Reactor Pressure | barg | 50 | 50 |
| First Reactor Ethylene Conversion | % | 86.7 | 83.2 |
| First Reactor Catalyst Type | Type | CAT 1 | CAT 1 |
| First Reactor Co-Catalyst1 Type | Type | Cocat. 1 | Cocat. 1 |
| First Reactor Co-Catalyst2 Type | Type | Cocat .2 | Cocat. 2 |
| First Reactor Co-Catalyst1 to Catalyst Molar Ratio (B to Hf ratio) | Ratio | 1.3 | 1.2 |
| First Reactor Co-Catalyst2 Scavenger Molar Ratio (Al to Hf ratio) | Ratio | 20.2 | 30.1 |
| First Reactor Residence Time | min | 9.0 | 10.2 |
| Second Reactor Feed Solvent / Ethylene Mass Flow Ratio | g/g | 2.1 | 2.1 |
| Second Reactor Feed Comonomer / Ethylene Mass Flow Ratio | g/g | 0.067 | 0.112 |
| Second Reactor Feed Hydrogen / Ethylene Mass Flow Ratio | g/g | 1.9E-05 | 9.6E-06 |
| Second Reactor Temperature | °C | 195 | 195 |
| Second Reactor Pressure | barg | 50 | 51 |
| Second Reactor Ethylene Conversion | % | 87.1 | 83.3 |
| Second Reactor Catalyst Type | Type | CAT 2 | CAT 2 |
| Second Reactor Co-Catalyst Type | Type | $Et_3Al$ | $Et_3Al$ |
| Second Reactor Co-Catalyst to Catalyst Molar Ratio (Al to Ti ratio) | Ratio | 4.0 | 4.0 |
| Second Reactor Residence Time | min | 6.5 | 7.4 |
| *solvent = ISOPAR E | | | |

Table 2: Properties of First Composition 1 and First Composition 2

| | Unit | First Composition 1 | First Composition 2 |
|---|---|---|---|
| Density | g/cc | 0.9174 | 0.9117 |
| $I_2$ | g/10 min | 0.83 | 0.86 |
| $I_{10}/I_2$ | | 7.7 | 8.14 |
| 7.0 - 1.2xlog(12) | | 7.1 | 7.08 |
| Mn (conv.gpc) | g/mol | 32,973 | 30,406 |
| Mw (conv.gpc) | | 117,553 | 115,271 |
| Mz (conv.gpc) | | 270,191 | 273,416 |
| Mw/Mn (conv.gpc) | | 3.57 | 3.79 |
| Mz/Mw (conv.gpc) | | 2.30 | 2.37 |
| Eta* (0.1 rad/s) | Pa•s | 9,496 | 11,139 |
| Eta* (1.0 rad/s) | Pa•s | 7,693 | 8,215 |
| Eta* (10 rad/s) | Pa•s | 4,706 | 4,704 |
| Eta* (100 rad/s) | Pa•s | 1,778 | 1,715 |
| Eta*0.1/ Eta*100 | | 5.34 | 6.5 |
| Eta zero | Pa•s | 11,210 | 13568 |
| MWCDI | | 2.64 | 2.86 |
| Vinyls | Per 1000 total Carbons | 134 | Not Measured |
| ZSVR | | 1.53 | 2.0 |

Tie Layer Resins

The raw materials shown in Table 3 are used to prepare the tie layer resins used in the Examples:

**Table 3**

| Product | Type (Abbreviation) | Density ($g/cm^3$) | Maleic Anhydride Concentration (%) |
|---|---|---|---|
| First Composition 1 | Described Above (First Comp. 1) | 0.9174 | 0 |
| First Composition 2 | Described Above (First Comp. 2) | 0.9117 | 0 |
| ATTANE™ NG 4701G | Ultra Low Density Polyethylene (ULDPE) | 0.912 | 0 |
| ELITE™ AT 6401 | Enhanced Polyethylene (EPE1) | 0.912 | 0 |
| ELITE™ 5400G | Enhanced Polyethylene (EPE2) | 0.916 | 0 |
| AMPLIFY™ TY 1053H | Maleic Anhydride Grafted HDPE (MAH-g-HDPE) | 0.958 | 1.35 |
| AMPLIFY™ TY 1057H | Maleic Anhydride Grafted LLDPE (MAH-g-LLDPE1) | 0.912 | 1.15 |
| Maleic Anhydride Grafted LLDPE 2 | Maleic Anhydride Grafted LLDPE (MAH-g-LLDPE2) | 0.912 | 2.30 |

With the exception of First Composition 1, First Composition 2, and Maleic Anhydride Grafted LLDPE 2, each of the above resins are commercially available from The Dow Chemical Company.

The inventive tie layer resins (Inventive Resins) and comparative tie layer resins (Comparative Resins) in Table 4 are prepared from the above raw materials:

**Table 4**

| Tie Layer Resin | Composition (all percentages are weight percent) |
|---|---|
| Inventive Resin 1 | MAH-g-LLDPE1 (13%)<br>First Composition 2 (87%) |
| Inventive Resin 2 | MAH-g-HDPE (11%)<br>First Composition 1 (89%) |
| Inventive Resin 3 | MAH-g-LLDPE1 (13%)<br>First Composition 1 (87%) |
| Inventive Resin 4 | MAH-g-LLDPE2 (6.5%)<br>First Composition 2 (93.5%) |
| Inventive Resin 5 | MAH-g-LLDPE2 (6.5%)<br>First Composition 1 (93.5%) |
| Comparative Resin A | MAH-g-LLDPE1 (13%)<br>ULDPE (87%) |
| Comparative Resin B | MAH-g-LLDPE1 (13%)<br>EPE1 (87%) |
| Comparative Resin C | MAH-g-LLDPE1 (13%)<br>EPE2 (87%) |
| Comparative Resin D | MAH-g-HDPE (11%)<br>EPE2 (89%) |

Multilayer Films

In the Examples below, multilayer films are fabricated using a 7-layer Alpine blown film line. Each of the films is a 5-layer film having an A/A/B/C/B/A/A structure (the outer "A" layers on each side form a single layer) with thicknesses as specified below for the particular Examples. The Alpine blown film line is configured as shown in Table 5 to prepare the multilayer films:

**Table 5**

| | |
|---|---|
| Blow-up Ratio | 2.5 |
| Output rate (N/m) ((1bs/inch of circ. of die)) | 1.38 (12.2) |
| Air ring blower % supply | 34 |
| Air ring coil temperature (°C) ((°F)) | 8.3 |
| Die size (cm) ((inch)) | 24.99 (9.84) |
| Die temperature (°C) ((°F)) | 232 (450) |
| Die gap (cm) ((inch)) | 0.01999 (0.00787) |
| Draw down ratio | 7.9 |
| Frostline height (cm) ((inch)) | 91.4 (36) |
| IBC coil temperature (°C) ((°F)) | 9.3 (48.7) |
| IBC exhaust | 57 |
| IBC supply | 45 |
| Line speed (ft/min) | 50.4 |
| Melt T (°C) ((°F)) for resins | 232.2 (450) |

Example 1

(1 mil corresponds to 25.4 μm)

In this Example, a film incorporating Inventive Resin 1 as tie layers is compared to films incorporating Comparative Resins A and B as tie layers. Each of the films has an overall thickness of 4 mil. Inventive Film 1 has the following structure (A/B/C/B/A, with layer thicknesses in parentheses): DOWLEX™ 2045G (1.5 mil)/Inventive Resin 1 (0.4 mil)/Polyamide (0.2 mil)/Inventive Resin 1 (0.4 mil)/DOWLEX™ 2045G (1.5 mil). Comparative Film A has the following structure (A/B/C/B/A, with layer thicknesses in parentheses): DOWLEX™ 2045G (1.5 mil)/Comparative Resin A (0.4 mil)/Polyamide (0.2 mil)/Comparative Resin A (0.4 mil)/DOWLEX™ 2045G (1.5 mil). Comparative Film B has the following structure (A/B/C/B/A, with layer thicknesses in parentheses): DOWLEX™ 2045G (1.5 mil)/Comparative Resin B (0.4 mil)/Polyamide (0.2 mil)/Comparative Resin B (0.4 mil)/DOWLEX™ 2045G (1.5 mil). DOWLEX™ 2045G is a LLDPE having a density of 0.922 g/cm$^3$ and a melt index ($I_2$) of 1.0 g/10 minutes and is commercially available from The Dow Chemical Company. The polyamide used is Ultramid C33L01, which is commercially available from BASF. The multilayer films are made on the 7 layer Alpine blown film line as described above.

The following properties are measured for each of the films using the techniques recited in the Test Methods section above: dart impact (Method A), normalized tear in the machine direction (MD) and cross direction (CD), gloss (45°), total haze, puncture strength, and secant modulus in the machine direction (MD) and cross direction (CD) at 2% strain. The results are shown in Table 6:

**Table 6**

| | | Inventive Film 1 | Comparative Film A | Comparative Film B |
|---|---|---|---|---|
| Dart Impact (Method-A) | g | 985 | 715 | 841 |
| Normalized tear (MD) | g/mil | 219 | 223 | 238 |
| Normalized tear (CD) | g/mil | 370 | 432 | 474 |
| Gloss - 45 degree | % | 56 | 60 | 63 |
| Haze - total | % | 20 | 18 | 17 |
| Puncture Strength | N.m/cm$^3$ (ft*$lb_f$/in$^3$) | 9 (109) | 8.7 (105) | 9.2 (111) |
| Secant Modulus - MD at 2% strain | MPa (psi) | 193.9 (28116) | 181.6 (26346) | 183.6 (26635) |
| Secant Modulus - CD at 2% strain | MPa (psi) | 220.4 (31971) | 216.4 (31393) | 213.4 (30945) |

This data demonstrate that the toughness of a multilayer film (Inventive Film 1), as determined by dart impact values, can be improved using an inventive tie layer resin (Inventive Resin 1). Other properties such as puncture strength and tear in the machine direction are not compromised by the improvement in dart impact. Furthermore, the improvement in dart impact (-38%) in Inventive Film 1 relative to Comparative Films A and B is not realized by reducing density which is a common approach for increasing toughness. By not reducing density, the stiffness (e.g., secant modulus) of the multilayer film is not compromised. Thus, Inventive Resin 1 provides the unexpected benefit of improving toughness of a multilayer film while not compromising other physical properties.

Example 2

In this Example, a film incorporating Inventive Resin 1 as tie layers is compared to a film incorporating Comparative Resin C as tie layers. Each of the films has an overall thickness of 4 mil. While the films have the same overall thickness, the films have different layer thicknesses for the polyamide layer. Inventive Film 1 is the same as prepared above in Example 1. Comparative Film C has the following structure (A/B/C/B/A, with layer thicknesses in parentheses): DOWLEX™ 2045G (1.4 mil)/Comparative Resin C (0.4 mil)/Polyamide (0.4 mil)/Comparative Resin C (0.4 mil)/DOWLEX™ 2045G (1.4 mil). The multilayer films are made on the 7 layer Alpine blown film line as described above.

The following properties are measured for each of the films using the techniques recited in the Test Methods section above: dart impact (Method A), normalized tear in the machine direction (MD) and cross direction (CD), gloss (45°), total haze, puncture strength, and secant modulus in the machine direction (MD) and cross direction (CD) at 2% strain. The results are shown in Table 7:

**Table 7**

| | | Inventive Film 1 | Comparative Film C |
|---|---|---|---|
| Dart Impact (Method-A) | g | 985 | 970 |
| Normalized tear (MD) | g/mil | 219 | 256 |
| Normalized tear (CD) | g/mil | 370 | 389 |
| Gloss - 45 degree | % | 56 | 62 |
| Haze - total | % | 20 | 18 |
| Puncture Strength | $N.m/cm^3$ ($ft*lb_f/in^3$) | 9 (109) | 8.7 (105) |
| Secant Modulus - MD at 2% strain | MPa (Psi) | 193.9 (28116) | 194.1 (28151) |
| Secant Modulus - CD at 2% strain | MPa (Psi) | 220.4 (31971) | 221.3 (32096) |

This data demonstrate that the use of a tie layer formed from Inventive Resin 1 can be used to reduce the amount of polyamide in the film from 10% of the total thickness to 5% of the total thickness without compromising dart impact. Further, the use of Inventive Resin 1 as the tie layers in Inventive Film 1 has limited effect on other film properties, notably tear in the machine direction.

Example 3

In this Example, a film incorporating Inventive Resin 2 as tie layers is compared to a film incorporating Comparative Resin D as tie layers. These tie layer resins incorporate maleic anhydride grafted HDPE as one of the components. Each of the films has an overall thickness of 4 mil. Inventive Film 2 has the following structure (A/B/C/B/A, with layer thicknesses in parentheses): DOWLEX™ 2045G (1.5 mil)/Inventive Resin 2 (0.4 mil)/Polyamide (0.2 mil)/Inventive Resin 2 (0.4 mil)/DOWLEX™ 2045G (1.5 mil). Comparative Film D has the following structure (A/B/C/B/A, with layer thicknesses in parentheses): DOWLEX™ 2045G (1.5 mil)/Comparative Resin D (0.4 mil)/Polyamide (0.2 mil)/Comparative Resin D (0.4 mil)/DOWLEX™ 2045G (1.5 mil). The multilayer films are made on the 7 layer Alpine blown film line as described above.

The following properties are measured for each of the films using the techniques recited in the Test Methods section above: dart impact (Method A), normalized tear in the machine direction (MD) and cross direction (CD), gloss (45°), total haze, puncture strength, and secant modulus in the machine direction (MD) and cross direction (CD) at 2% strain. The results are shown in Table 8:

**Table 8**

| | | Inventive Film 2 | Comparative Film D |
|---|---|---|---|
| Dart Impact (Method-A) | G | 823 | 619 |
| Normalized tear (MD) | g/mil | 345 | 359 |
| Normalized tear (CD) | g/mil | 839 | 522 |
| Gloss - 45 degree | % | 65 | 61 |
| Haze - total | % | 16 | 18 |
| Puncture Strength | $N.m/cm^3$ ($ft*lb_f/in^3$) | 9.5 (115) | 9.1 (110) |
| Secant Modulus - MD at 2% strain | MPa (Psi) | 207.7 (30120) | 204.8 (29709) |
| Secant Modulus - CD at 2% strain | MPa (Psi) | 236.9 (34363) | 233.7 (33902) |

This data demonstrate that the use of a tie layer formed from Inventive Resin 2, which incorporates First Composition 1 having a density of 0.9174 $g/cm^3$, can still significantly improve the toughness of a multilayer film based on dart impact.

Example 4

In this Example, films incorporating Inventive Resins 1, 3, 4, and 5 are evaluated as tie layers in multilayer films. Each of the Inventive Resins incorporate a maleic anhydride grafted LLDPE except the Inventive Resins 4 and 5

use a maleic anhydride grafted LLDPE with double the concentration of maleic anhydride. In order to include equal overall amounts of maleic anhydride in the Inventive Resins, the amount of maleic anhydride grafted LLDPE in Inventive Resins 4 and 5 is about half of that used in Inventive Resins 1 and 3. Inventive Resins 1 and 4 incorporate First Composition 2 while Inventive Resins 3 and 5 incorporate First Composition 2. Each of the films has an overall thickness of 4 mil. Inventive Film 1 is the same as prepared above in Example 1. Inventive Film 3 has the following structure (A/B/C/B/A, with layer thicknesses in parentheses): DOWLEX™ 2045G (1.5 mil)/Inventive Resin 3 (0.4 mil)/Polyamide (0.2 mil)/Inventive Resin 3 (0.4 mil)/DOWLEX™ 2045G (1.5 mil). Inventive Film 4 has the following structure (A/B/C/B/A, with layer thicknesses in parentheses): DOWLEX™ 2045G (1.5 mil)/Inventive Resin 4 (0.4 mil)/Polyamide (0.2 mil)/Inventive Resin 4 (0.4 mil)/DOWLEX™ 2045G (1.5 mil). Inventive Film 5 has the following structure (A/B/C/B/A, with layer thicknesses in parentheses): DOWLEX™ 2045G (1.5 mil)/Inventive Resin 5 (0.4 mil)/Polyamide (0.2 mil)/Inventive Resin 5 (0.4 mil)/DOWLEX™ 2045G (1.5 mil). The multilayer films are made on the 7 layer Alpine blown film line as described above.

The following properties are measured for each of the films using the techniques recited in the Test Methods section above: dart impact (Method A), normalized tear in the machine direction (MD) and cross direction (CD), gloss (45°), total haze, puncture strength, and secant modulus in the machine direction (MD) and cross direction (CD) at 2% strain. The results are shown in Table 9:

**Table 9**

| | | Inventive Film 1 | Inventive Film 3 | Inventive Film 4 | Inventive Film 5 |
|---|---|---|---|---|---|
| Dart Impact (Method-A) | g | 985 | 838 | 985 | 907 |
| Normalized tear (MD) | g/mil | 219 | 207 | 229 | 221 |
| Normalized tear (CD) | g/mil | 370 | 569 | 389 | 545 |
| Gloss - 45 degree | % | 56 | 59 | 61 | 59 |
| Haze - total | % | 20 | 20 | 21 | 20 |
| Puncture Strength | $N.m/cm^3$ ($ft*lb_f/in^3$) | 9 (109) | 9.2 (111) | 7.9 (95) | 8.2 (99) |
| Secant Modulus - MD at 2% strain | MPa (psi) | 193.9 (28116) | 201.6 (29237) | 191.6 (27795) | 28237 |
| Secant Modulus - CD at 2% strain | MPa (Psi) | 220.4 (31971) | 231.4 (33564) | 216.6 (31418) | 221.2 (32086) |

This data demonstrate that the amount of maleic anhydride grafted polyethylene used in the Inventive Resins impacts the physical properties of the multilayer film. For example, in comparing Inventive Film 3 to Inventive Film 5, Inventive Film 5 includes a larger amount of First Composition 1 which is believed to provide the increase in dart impact, but less maleic anhydride grafted polyethylene which is believed to provide the decrease in puncture strength.

## Example 5

In this Example, the adhesion strength to polyamide of Inventive Resins 1-5 and Comparative Resins A-D are evaluated. Inventive Films 1-5 and Comparative Films A-D as described above are evaluated. The results are provided in Table 10.

**Table 10**

| | Inv. Film 1 | Inv. Film 2 | Inv. Film 3 | Inv. Film 4 | Inv. Film 5 | Comp. Film A | Comp. Film B | Comp. Film C | Comp. Film D |
|---|---|---|---|---|---|---|---|---|---|
| Adhesion (N/ 15 mm) | ≥15 | 16 | 16 | 16 | 16 | 16 | 15 | 18 | 15 |

The data demonstrate that each of the Inventive Resins provide adequate adhesion (> 12 N/mm) to the polyamide layer.

Example 6

The inclusion of First Composition 1 and/or First Composition 2 are believed to contribute to the improved toughness (e.g., dart impact, puncture strength, and/or tear) of the inventive tie layer resins. To evaluate the toughness provided these Compositions, two monolayer films are formed: Monolayer 1 formed from 100% First Composition 1 and Monolayer 2 formed from 100% First Composition 2. The Monofilms have a nominal thickness of 1 mil. The dart impact (Method A), puncture strength, and normalized tear in the machine direction (MD) and cross direction (CD) of the Monofilms are measured and compared to the same properties of multilayer films incorporating the First Compositions in Inventive Resins used in the tie layers. The dart impact values are normalized (g/mil). For First Composition 1, the multilayer film is Inventive Film 3 (from above), and for First Composition 2, the multilayer film is Inventive Film 1 (from above). The results are shown in Tables 11 and 12.

**Table 11**

| | | Monofilm 1 | Inventive Film 3 |
|---|---|---|---|
| Normalized Dart Impact (Method-A) | g/mil | 1390 | 210 |
| Normalized tear (MD) | g/mil | 239 | 207 |
| Normalized tear (CD) | g/mil | 557 | 569 |
| Puncture Strength | $N.m/cm^3$ ($ft*lb_f/in^3$) | 13.5 (163) | 9.2 (111) |

**Table 12**

| | | Monofilm 2 | Inventive Film 1 |
|---|---|---|---|
| Normalized Dart Impact (Method-A) | g/mil | 1550 | 246 |
| Normalized tear (MD) | g/mil | 261 | 219 |
| Normalized tear (CD) | g/mil | 498 | 370 |
| Puncture Strength | $N.m/cm^3$ ($ft*lb_f/in^3$) | 31.7 (383) | 9 (109) |

As shown in Tables 11 and 12, the inclusion of First Compositions 1 and 2 in the Inventive Resins appears to be the key contributor to improvements in overall dart impact and puncture strength of multilayer films including such Inventive Resins as tie layers.

Example 7

In this Example, films incorporating Inventive Resin 1 as tie layers are compared to films incorporating Comparative Resin C as tie layers. Each of the films has a 100% ethylene vinyl alcohol (EVOH) in its core layer. Each of the films has an overall thickness of 4 mil. While the films have the same overall thickness, the thickness of the EVOH layer is different. Inventive Film 6 and Comparative Film E have a 0.2 mil thick layer of EVOH. Inventive Film 7 and Comparative Film F have a 0.4 mil thick layer of EVOH. Inventive Film 6 has the following structure (A/B/C/B/A, with layer thicknesses in parentheses): DOWLEX™ 2045G (1.5 mil)/Inventive Resin 1 (0.4 mil)/EVOH (0.2 mil)/Inventive Resin 1 (0.4 mil)/DOWLEX™ 2045G (1.5 mil). Comparative Film E has the following structure (A/B/C/B/A, with layer thicknesses in parentheses): DOWLEX™ 2045G (1.5 mil)/Comparative Resin C (0.4 mil)/EVOH (0.2 mil)/Comparative Resin C (0.4 mil)/DOWLEX™ 2045G (1.5 mil). Inventive Film 7 has the following structure (A/B/C/B/A, with layer thicknesses in parentheses): DOWLEX™ 2045G (1.4 mil)/Inventive Resin 1 (0.4 mil)/EVOH (0.4 mil)/Inventive Resin 1 (0.4 mil)/DOWLEX™ 2045G (1.4 mil). Comparative Film F has the following structure (A/B/C/B/A, with layer thicknesses in parentheses): DOWLEX™ 2045G (1.4 mil)/Comparative Resin C (0.4 mil)/EVOH (0.4 mil)/Comparative Resin C (0.4 mil)/DOWLEX™ 2045G (1.4 mil). The multilayer films are made on the 7 layer Alpine blown film line as described above.

The following properties are measured for each of the films using the techniques recited in the Test Methods section above: dart impact (Method A), normalized tear in the machine direction (MD) and cross direction (CD), gloss (45°), total haze, puncture strength, and secant modulus in the machine direction (MD) and cross direction (CD) at 2% strain. The results are shown in Table 13:

**Table 13**

| | | Inventive Film 6 | Comparative Film E | Inventive Film 7 | Comparative Film F |
|---|---|---|---|---|---|
| Dart Impact (Method-A) | g | 625 | 577 | 580 | 523 |
| Normalized tear (MD) | g/mil | 1079 | 1450 | 431 | 430 |
| Normalized tear (CD) | g/mil | 290 | 670 | 84 | 131 |
| Gloss - 45 degree | % | 66 | 66 | 66 | 65 |
| Haze - total | % | 18 | 19 | 19 | 19 |
| Puncture Strength | N.m/cm$^3$ (ft*lb$_f$/in$^3$) | 10.6 (128) | 10 (121) | 8.9 (108) | 8.5 (103) |
| Secant Modulus - MD at 2% strain | MPa (Psi) | 278.6 (40414) | 257.9 (37399) | 337.8 (49000) | 355.8 (51602) |
| Secant Modulus - CD at 2% strain | MPa (Psi) | 303.3 (43986) | 280.3 (40660) | 347.3 (50377) | 356.7 (51731) |

These data demonstrate that the use of a tie layer formed from Inventive Resin 1 can be used to improve dart and puncture in films containing an EVOH layer. The data also demonstrate that a change the thickness of the EVOH layer does not seem to affect the absolute scale of improvement provided by the inventive tie layer.

## Claims

**1.** A resin for use as a tie layer in a multilayer structure, the resin comprising:

a first composition, wherein the first composition comprises at least one ethylene-based polymer and wherein the first composition comprises a MWCDI value greater than 0.9, wherein MWCDI is measured as described in the description; and a melt index ratio (110/12) that meets the following equation: 110/12 $\geq$ 7.0 - 1.2 x log (12); melt indices 12 and 110 are measured in accordance to ASTM D-1238 (method B) at 190°C and at 2.16 kg and 10 kg load, respectively;
and
a maleic anhydride grafted polyethylene comprising a maleic anhydride grafted high density polyethylene, a maleic anhydride grafted linear low density polyethylene, a maleic anhydride grafted polyethylene elastomer, or a combination thereof;
wherein the amount of maleic anhydride constituent grafted onto the polyethylene chain is greater than 0.05 weight percent to 3 weight percent (based on the weight of the polyethylene) as determined by titration analysis, FTIR analysis or any other appropriate method; and
wherein the resin comprises 80 to 95 weight percent of the first composition and 5 to 20 weight percent of the maleic anhydride grafted polyethylene.

**2.** The resin of claim 1, further comprising a polyolefin elastomer.

**3.** The resin of claim 1 or claim 2, wherein the first composition has a MWCDI value less than, or equal to, 10.0.

**4.** The resin of any one of the preceding claims, wherein the first composition has one or more of the following: a ZSVR value from 1.2 to 3.0, wherein the ZSVR value is measured as described in the description; a melt index ratio $I_{10}/I_2$ less than, or equal to, 9.2; and/or a vinyl unsaturation level greater than 10 vinyls per 1,000,000 total carbons.

**5.** A pellet formed from the resin of any one of the preceding claims.

**6.** A multilayer structure comprising at least three layers, each layer having opposing facial surfaces and arranged in the order A/B/C, wherein:

Layer A comprises polyethylene;

Layer B comprises the resin of any of claims 1-5, wherein a top facial surface of Layer B is in adhering contact with a bottom facial surface of Layer A; and

Layer C comprises polyamide, ethylene vinyl alcohol, or combinations thereof, wherein a top facial surface of Layer C is in adhering contact with a bottom facial surface of Layer B.

**7.** The multilayer structure of claim 6, wherein Layer B comprises at least 2.5% of the total thickness of the multilayer structure.

**8.** The multilayer structure of any one of claims 6-7, wherein Layer B exhibits a normalized dart impact value at least twice the normalized dart value of the multilayer structure when measured according to ASTM D1709 (Method A), and wherein Layer B exhibits a normalized puncture strength value higher than the normalized puncture strength value of the multilayer structure when measured according to ASTM D5748.

**9.** An article formed from the multilayer structure of any one of claims 6-8.

**Patentansprüche**

**1.** Ein Harz zur Verwendung als eine Haftvermittlerschicht in einer mehrschichtigen Struktur, wobei das Harz Folgendes beinhaltet:

eine erste Zusammensetzung, wobei die erste Zusammensetzung mindestens ein Polymer auf Ethylenbasis beinhaltet und wobei die erste Zusammensetzung Folgendes beinhaltet: einen MWCDI-Wert von mehr als 0,9, wobei MWCDI wie in der Beschreibung beschrieben gemessen wird; und ein Schmelzindexverhältnis (110/12), das die folgende Gleichung erfüllt: $I_{10}/I_2 \geq 7{,}0 - 1{,}2 \times \log (12)$;

wobei die Schmelzindizes $I_2$ und 110 nach ASTM D-1238 (Verfahren B) bei 190 °C und bei 2,16 kg bzw. 10 kg Last gemessen werden;

und

ein maleinsäureanhydridgepfropftes Polyethylen, das ein maleinsäureanhydridgepfropftes Polyethylen hoher Dichte, ein maleinsäureanhydridgepfropftes lineares Polyethylen niederer Dichte, ein maleinsäureanhydridgepfropftes Polyethylenelastomer oder eine Kombination davon beinhaltet;

wobei die Menge an auf die Polyethylenkette gepfropftem Maleinsäureanhydridbestandteil mehr als 0,05 Gewichtsprozent bis 3 Gewichtsprozent (bezogen auf das Gewicht des Polyethylens) beträgt, wie durch Titrationsanalyse, FTIR-Analyse oder jedes andere geeignete Verfahren bestimmt; und

wobei das Harz zu 80 bis 95 Gewichtsprozent die erste Zusammensetzung und zu 5 bis 20 Gewichtsprozent das maleinsäureanhydridgepfropfte Polyethylen beinhaltet.

**2.** Harz gemäß Anspruch 1, das ferner ein Polyolefinelastomer beinhaltet.

**3.** Harz gemäß Anspruch 1 oder Anspruch 2, wobei die erste Zusammensetzung einen MWCDI-Wert von weniger als oder gleich 10,0 aufweist.

**4.** Harz gemäß einem der vorhergehenden Ansprüche, wobei die erste Zusammensetzung eines oder mehrere von Folgendem aufweist: einen ZSVR-Wert von 1,2 bis 3,0, wobei der ZSVR-Wert wie in der Beschreibung beschrieben gemessen wird; ein Schmelzindexverhältnis $I_{10}/I_2$ von weniger als oder gleich 9,2; und/oder ein Vinylungesättigtheitsniveau von mehr als 10 Vinyl pro 1 000 000 Gesamtkohlenstoffen.

**5.** Ein aus dem Harz gemäß einem der vorhergehenden Ansprüche gebildetes Pellet.

**6.** Eine mehrschichtige Struktur, die mindestens drei Schichten beinhaltet, wobei jede Schicht einander entgegengesetzte Außenflächen aufweist und in der Reihenfolge A/B/C angeordnet ist, wobei:

Schicht A Polyethylen beinhaltet;

Schicht B das Harz gemäß einem der Ansprüche 1-5 beinhaltet, wobei eine obere Außenfläche von Schicht B in Haftkontakt mit einer unteren Außenfläche von Schicht A steht; und

Schicht C Polyamid, Ethylenvinylalkohol oder Kombinationen davon beinhaltet, wobei eine obere Außenfläche von Schicht C in Haftkontakt mit einer unteren Außenfläche von Schicht B steht.

7. Mehrschichtige Struktur gemäß Anspruch 6, wobei Schicht B mindestens 2,5 % der Gesamtdicke der mehrschichtigen Struktur ausmacht.

8. Mehrschichtige Struktur gemäß einem der Ansprüche 6-7, wobei Schicht B einen normierten Pfeilfallwert von mindestens dem Zweifachen des normierten Pfeilwerts der mehrschichtigen Struktur, wenn nach ASTM D1709 (Verfahren A) gemessen, zeigt und wobei Schicht B einen normierten Durchstoßfestigkeitswert zeigt, der höher ist als der normierte Durchstoßfestigkeitswert der mehrschichtigen Struktur, wenn nach ASTM D5748 gemessen.

9. Ein aus der mehrschichtigen Struktur gemäß einem der Ansprüche 6-8 gebildeter Artikel.

## Revendications

1. Une résine pour son utilisation en tant que couche de liaison dans une structure multicouche, la résine comprenant :

   une première composition, où la première composition comprend au moins un polymère à base d'éthylène et où la première composition comprend une valeur de MWCDI supérieure à 0,9, où le MWCDI est mesuré tel que cela est décrit dans la description ; et un rapport d'indices de fluidité à l'état fondu (110/12) qui satisfait à l'équation suivante : $I_{10}/I_2 \geq 7{,}0 - 1{,}2 \times \log (12)$ ;
   les indices de fluidité à l'état fondu $I_2$ et I10 sont mesurés conformément à l'ASTM D-1238 (méthode B) à 190 °C et à 2,16 kg et 10 kg de charge, respectivement ; et
   un polyéthylène greffé par anhydride maléique comprenant un polyéthylène haute densité greffé par anhydride maléique, un polyéthylène basse densité linéaire greffé par anhydride maléique, un élastomère de polyéthylène greffé par anhydride maléique, ou une combinaison de ceux-ci ;
   où la quantité de constituant anhydride maléique greffé sur la chaîne de polyéthylène va de plus de 0,05 pour cent en poids à 3 pour cent en poids (rapporté au poids du polyéthylène) tel que cela est déterminé par analyse par titrage, analyse FTIR ou toute autre méthode appropriée ; et
   où la résine comprend de 80 à 95 pour cent en poids de la première composition et de 5 à 20 pour cent en poids du polyéthylène greffé par anhydride maléique.

2. La résine de la revendication 1, comprenant en outre un élastomère de polyoléfine.

3. La résine de la revendication 1 ou de la revendication 2, où la première composition a une valeur de MWCDI inférieure, ou égale, à 10,0.

4. La résine de l'une quelconque des revendications précédentes, où la première composition a une ou plusieurs propriétés parmi les suivantes : une valeur de ZSVR allant de 1,2 à 3,0, où la valeur de ZSVR est mesurée tel que cela est décrit dans la description ; un rapport d'indices de fluidité à l'état fondu $I_{10}/I_2$ inférieur, ou égal, à 9,2 ; et/ou un niveau d'insaturation vinylique de plus de 10 vinyles pour 1 000 000 carbones totaux.

5. Un granule formé à partir de la résine de l'une quelconque des revendications précédentes.

6. Une structure multicouche comprenant au moins trois couches, chaque couche ayant des surfaces faciales opposées et étant agencée dans l'ordre A/B/C, où :

   la couche A comprend du polyéthylène ;
   la couche B comprend la résine de n'importe lesquelles des revendications 1 à 5, où une surface faciale de dessus de la couche B est en contact adhérent avec une surface faciale de dessous de la couche A ; et
   la couche C comprend du polyamide, de l'éthylène alcool vinylique, ou des combinaisons de ceux-ci, où une surface faciale de dessus de la couche C est en contact adhérent avec une surface faciale de dessous de la couche B.

7. La structure multicouche de la revendication 6, où la couche B constitue au moins 2,5 % de l'épaisseur totale de la structure multicouche.

8. La structure multicouche de l'une quelconque des revendications 6 à 7, où la couche B présente une valeur de résistance à l'impact d'un projectile normalisée d'au moins deux fois la valeur de résistance au projectile normalisée de la structure multicouche lorsqu'elle est mesurée selon l'ASTM D1709 (Méthode A), et où la couche B présente

une valeur de résistance à la perforation normalisée plus élevée que la valeur de résistance à la perforation normalisée de la structure multicouche lorsqu'elle est mesurée selon l'ASTM D5748.

**9.** Un article formé à partir de la structure multicouche de l'une quelconque des revendications 6 à 8.

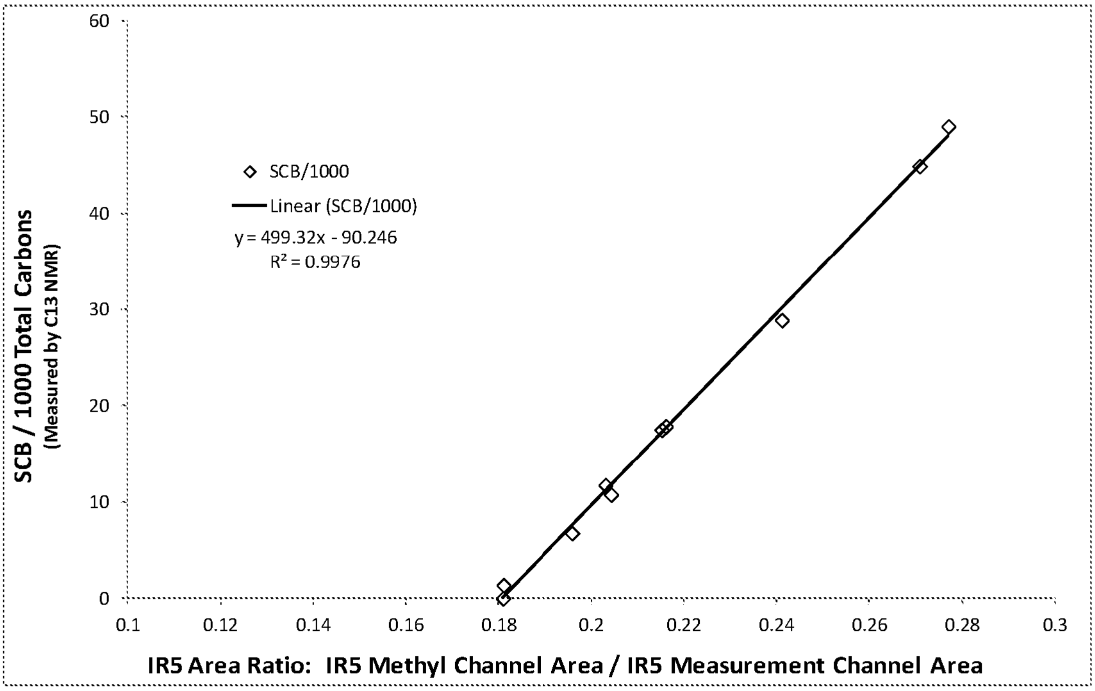


FIGURE 1

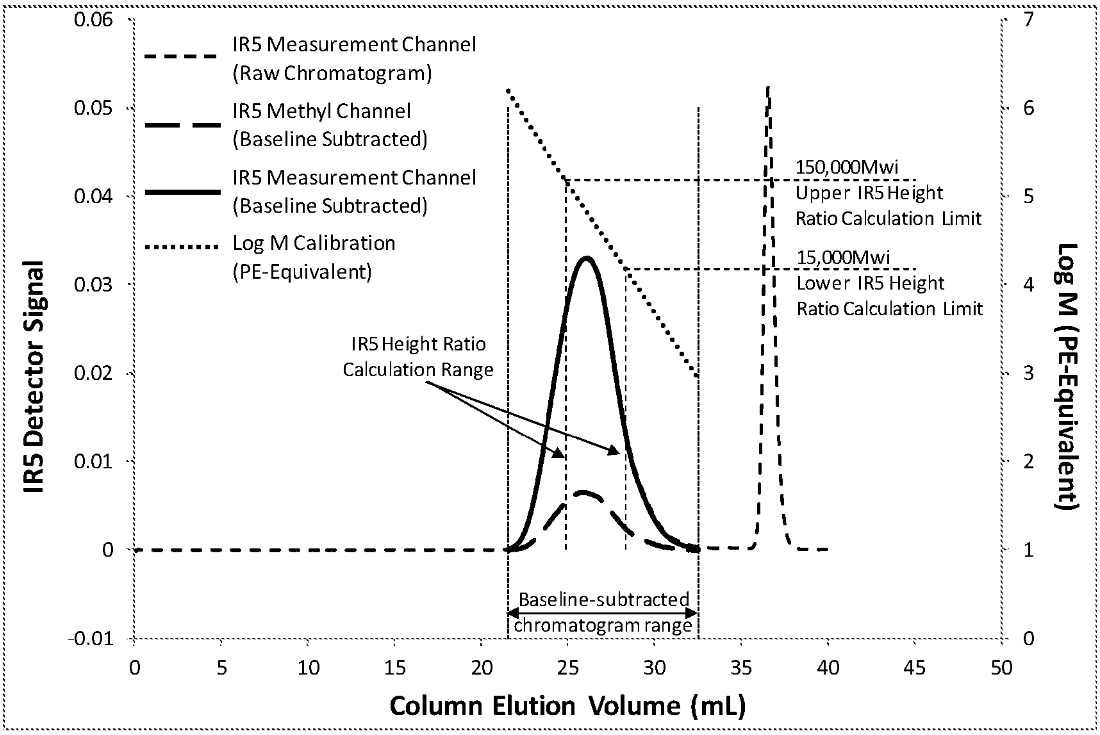


FIGURE 2

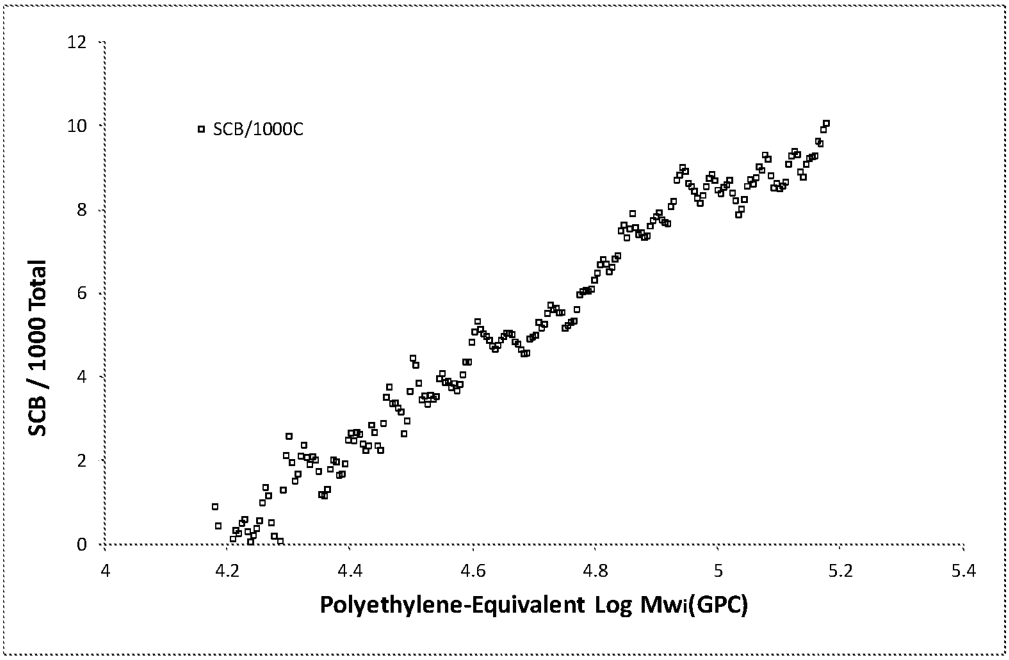


FIGURE 3

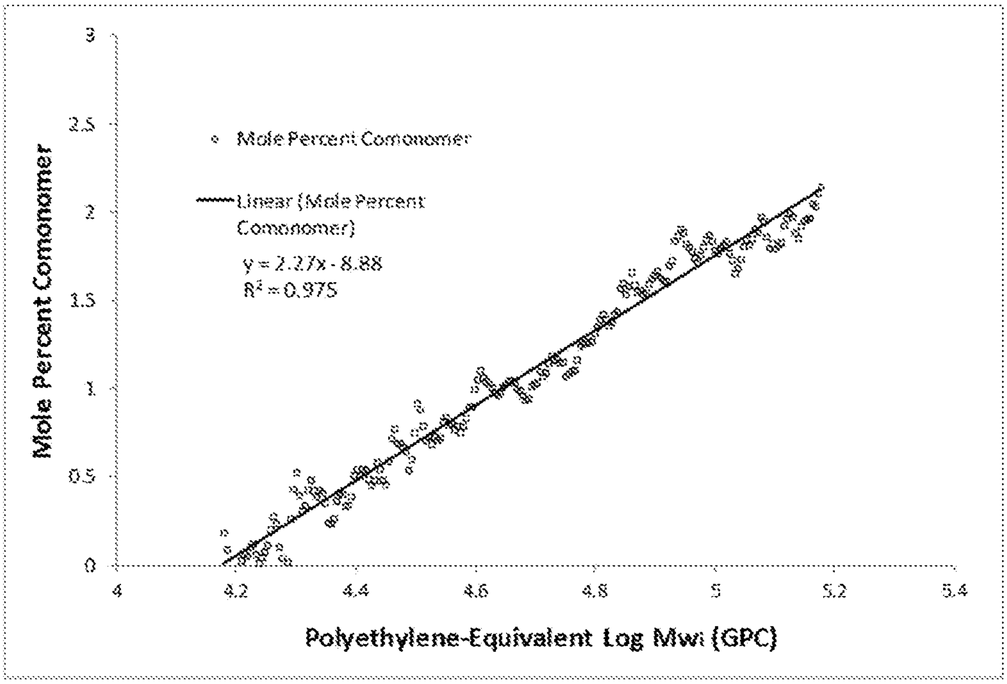


FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015200743 A
- WO 2014105404 A
- US 4612300 A
- US 4314912 A
- US 4547475 A
- US 6103657 A
- US 5064802 A
- US 5153157 A
- US 5296433 A
- US 5321106 A
- US 5350723 A
- US 5425872 A
- US 5625087 A
- US 5721185 A
- US 5783512 A
- US 5883204 A
- US 5919983 A
- US 6696379 B
- US 7163907 B
- US 6515155 B1
- US 7897689 B
- WO 2014113623 A
- US 4599392 A
- US 5272236 A
- US 5278272 A
- US 5582923 A
- US 5733155 A
- US 3645992 A
- US 4076698 A
- US 3914342 A
- US 5854045 A
- US 5977251 A


### Non-patent literature cited in the description


- Polymer Handbook. Wiley, 1999, 1-76
- **WILLIAMS ; WARD.** *J. Polym. Sci., Polym. Letters,* 1968, vol. 6, 621
- **KARJALA et al.** Detection of Low Levels of Long-chain Branching in Polyolefins, Annual Technical Conference. *Society of Plastics Engineers,* 2008, 887-891
- **BUSICO, V. et al.** *Macromolecules,* 2005, vol. 38, 6988
- **J. C. RANDALL et al.** NMR and Macromolecules. *ACS Symposium series,* 247
- Am. Chem. Soc. Washington, D.C, 1984
- **J. C. RANDALL.** Polymer Sequence Determination. Academic Press, 1977
- **WILLIAMS ; WARD.** *J. Polym. Sci., Polym. Let.,* 1968, vol. 6, 621